# EUROPEAN PATENT APPLICATION

(11) **EP 4 814 649 A1**
(43) Date of publication of application: **30.09.2026**
(21) Application number: 24913596.3
(22) Date of filing: 16.12.2024
(51) Int. Cl.: G06F 1/16, H02P 1/22, H02K 7/116

(54) **ELECTRONIC DEVICE COMPRISING SWEEPER**

(30) Priority: 26.12.2023 KR 20230191289; 26.01.2024 KR 20240012037
(71) Applicant: Samsung Electronics Co., Ltd., Suwon-si, Gyeonggi-do 16677 (KR)
(72) Inventor: SONG, Inchan, Suwon-si, Gyeonggi-do 16677 (KR); KANG, Hyunggwang, Suwon-si, Gyeonggi-do 16677 (KR); KIM, Yangwook, Suwon-si, Gyeonggi-do 16677 (KR); CHO, Hyoungtak, Suwon-si, Gyeonggi-do 16677 (KR); JEONG, Hoyoung, Suwon-si, Gyeonggi-do 16677 (KR)
(74) Representative: Gulde & Partner
(86) International application number: PCT/KR2024/020359
(87) International publication number: WO 2025/143653

(57) **Abstract**

An electronic device according to one embodiment of the present disclosure may comprise: a housing including a first housing and a second housing that is movably coupled to the first housing; a driving motor for generating driving force for moving the second housing; a pinion gear connected to the driving motor; a rack gear which is disposed in the second housing so as to be at least partially engaged with the pinion gear, and which linearly moves by being linked with the rotational motion of the pinion gear resulting from driving of the driving motor; a frame having at least one portion that surrounds the pinion gear; and a sweeper disposed to be supported by the frame.

## Description

### [Technical Field]

The present disclosure relates to an electronic device comprising a sweeper.

### [Background Art]

An electronic device (e.g., a rollable electronic device) may include a first housing and a second housing that is movably coupled with respect to the first housing. For a flexible display of the electronic device, according to movement of the second housing with respect to the first housing, a display surface area displayed to the outside may be expanded or reduced.

Movement of the second housing with respect to the first housing may be performed by a rack gear and a pinion gear. For example, the rack gear linearly moves by being linked with rotational motion of the pinion gear, and the second housing connected to the rack gear may be moved according to the linear movement of the rack gear.

The information described above may be provided as the related art for the purpose of enhancing the understanding of the present disclosure. None of the above-mentioned may be asserted as the prior art related to the present disclosure, or used to determine the prior art.

### [Disclosure of Invention]

### [Solution to Problem]

An electronic device according to one embodiment of the present disclosure may comprise a housing, a driving motor, a pinion gear, a rack gear, a frame, and a sweeper.

In one embodiment, the housing may comprise a first housing and a second housing that is movably coupled with respect to the first housing.

In one embodiment, the driving motor may generate driving force for movement of the second housing.

In one embodiment, the pinion gear may be connected to the driving motor.

In one embodiment, the rack gear may be disposed in the second housing so as to be at least partially engaged with the pinion gear, and may linearly move by being linked with rotational motion of the pinion gear resulting from driving of the driving motor.

In one embodiment, the frame may have at least one portion that surrounds the pinion gear.

In one embodiment, the sweeper may be disposed to be supported by the frame.

An electronic device according to one embodiment of the present disclosure may comprise a housing, a driving motor, a pinion gear, a rack gear, a connecting gear, and a sweeper.

In one embodiment, the connecting gear may be rotated by being linked with the pinion gear.

In one embodiment, the sweeper may be rotated by being linked with the connecting gear.

### [Brief Description of Drawings]

FIG. 1 is a block diagram of an electronic device in a network environment according to one embodiment.
FIG. 2A and FIG. 2B are views illustrating an electronic device in a slide-in state according to one embodiment of the present disclosure.
FIG. 3A and FIG. 3B are views illustrating an electronic device in a slide-out state according to one embodiment of the present disclosure.
FIG. 4 is an exploded perspective view of an electronic device according to one embodiment of the present disclosure.
FIG. 5A, FIG. 5B, and FIG. 5C are cross-sectional views illustrating an electronic device according to one embodiment of the present disclosure.
FIG. 6 is an exploded perspective view of an electronic device according to one embodiment of the present disclosure.
FIG. 7A and FIG. 7B are views illustrating a portion of an electronic device in a slide-in state according to one embodiment of the present disclosure.
FIG. 8A and FIG. 8B are views illustrating a portion of an electronic device in a slide-out state according to one embodiment of the present disclosure.
FIG. 9 is a view illustrating a driving motor and a pinion gear according to one embodiment of the present disclosure.
FIG. 10 is a view illustrating a frame and a sweeper according to one embodiment of the present disclosure.
FIG. 11 is a view illustrating a frame and a sweeper according to one embodiment of the present disclosure.
FIG. 12 is a view illustrating a foreign substance collection frame according to one embodiment of the present disclosure.
FIG. 13 is a view illustrating a gear frame and a foreign substance collection frame according to one embodiment of the present disclosure.
FIG. 14 is a view illustrating a rack gear, a sweeper, a gear frame, and a foreign substance collection frame according to one embodiment of the present disclosure.
FIG. 15 is a view illustrating a connecting gear according to one embodiment of the present disclosure.
FIG. 16 is a view illustrating a first brush and a second brush according to one embodiment of the present disclosure.
FIG. 17 is a view illustrating a sweeper shaft and a foreign substance collection frame according to one embodiment of the present disclosure.
FIG. 18 is a view illustrating a rack gear and a connecting gear according to one embodiment of the present disclosure.
FIG. 19 is a view illustrating a frame and a sweeper according to one embodiment of the present disclosure.

### [Mode for the Invention]

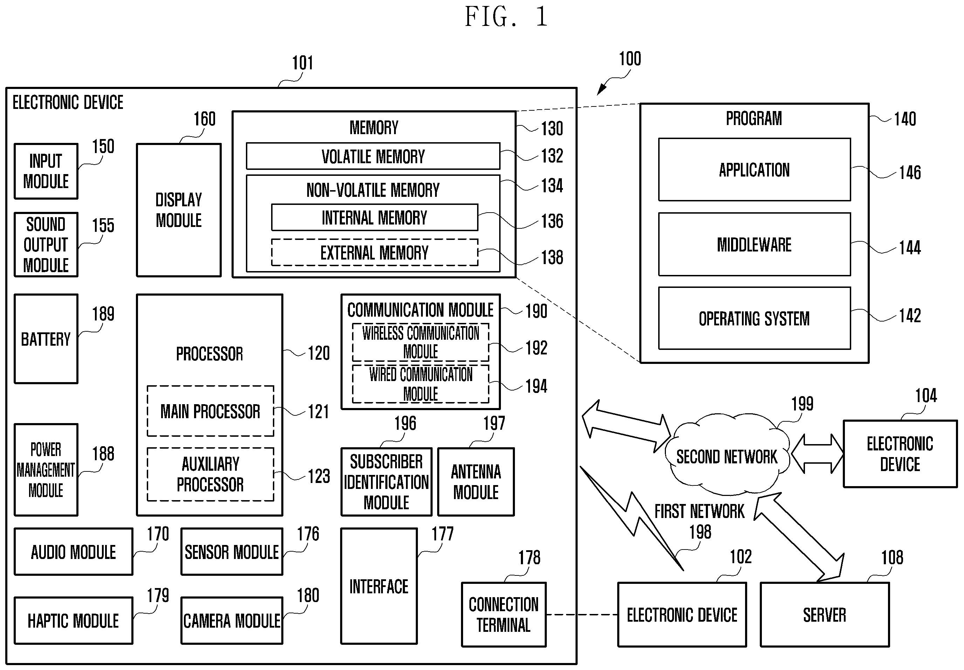

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

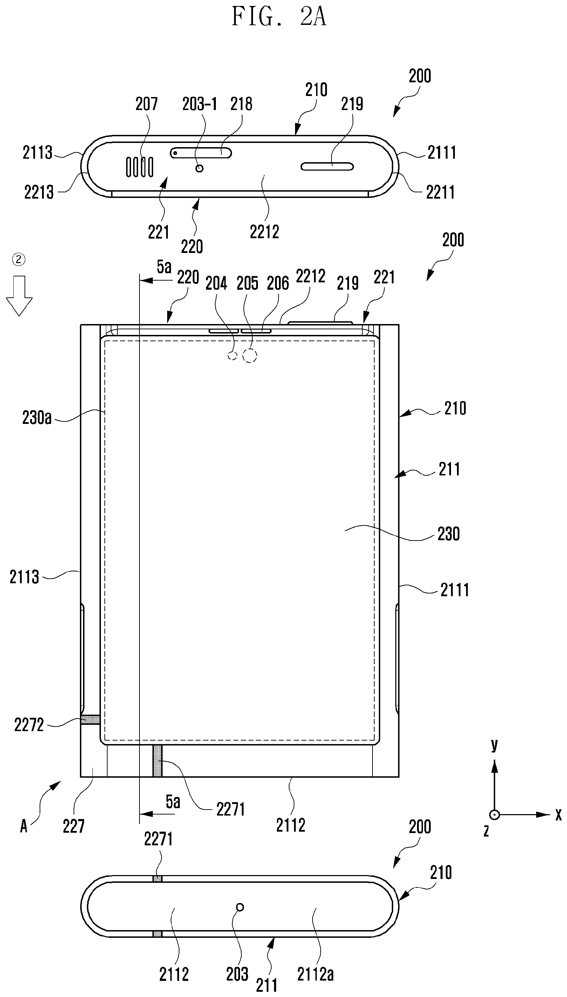

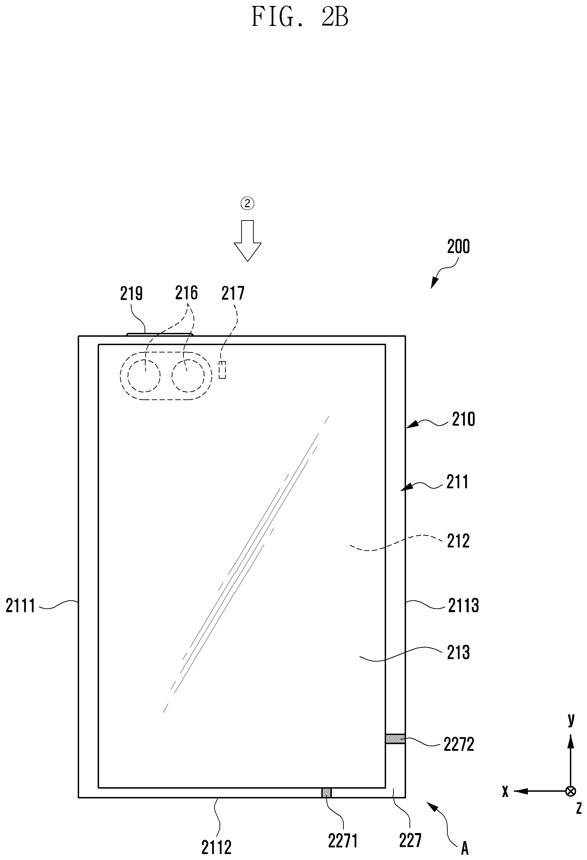

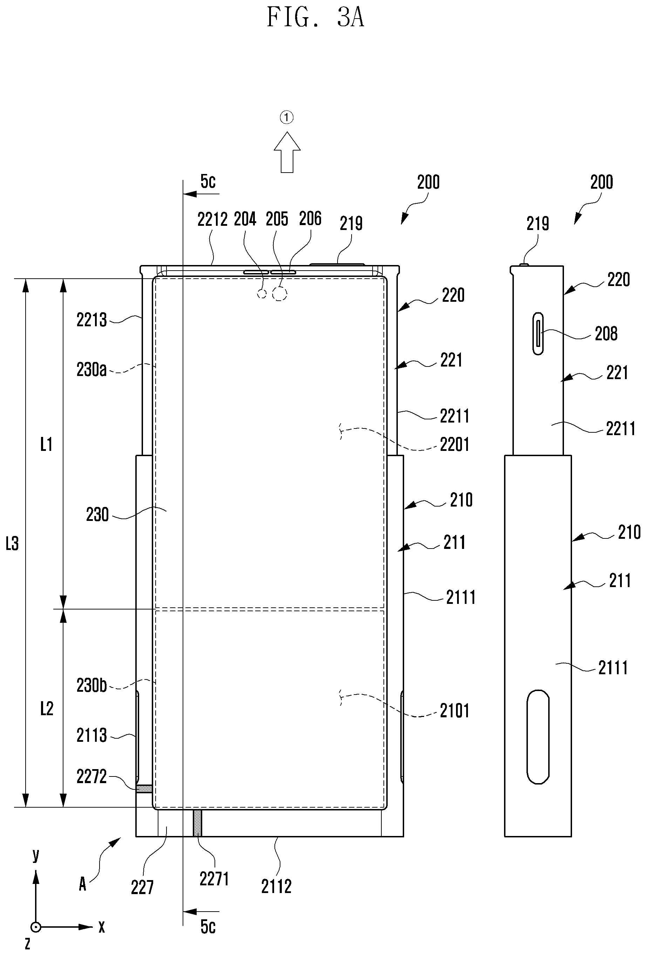

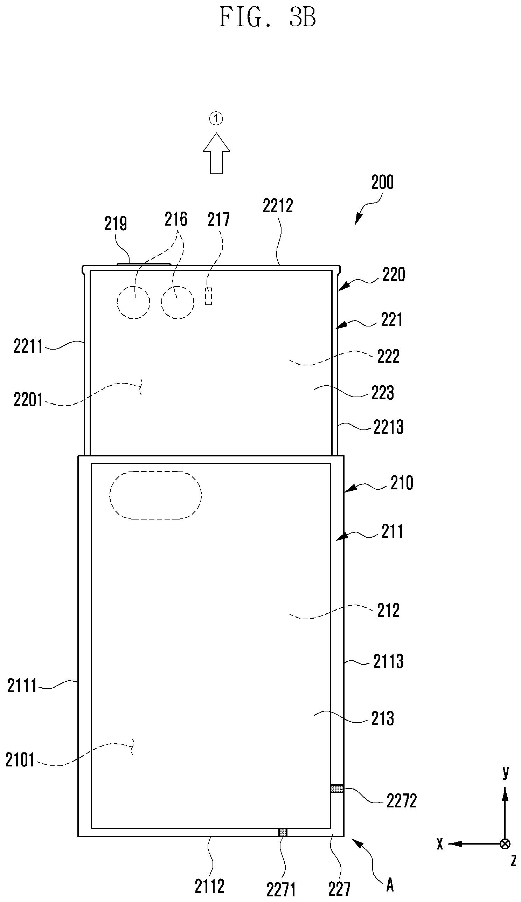

FIG. 2A and FIG. 2B are views illustrating a front surface and a rear surface of an electronic device in a slide-in state according to one embodiment of the present disclosure. FIG. 3A and FIG. 3B are views illustrating a front surface and a rear surface of an electronic device in a slide-out state according to one embodiment of the present disclosure.

An electronic device 200 of FIG. 2A to FIG. 3B may refer to an electronic device 101 of FIG. 1, or may include at least a portion of components of the electronic device 101 of FIG. 1.

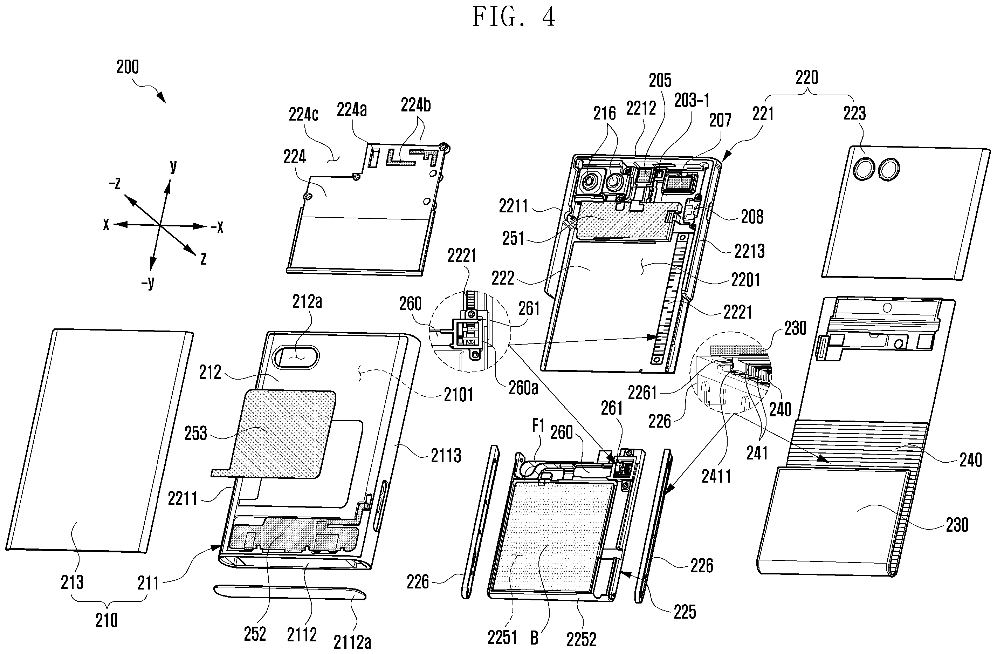

With reference to FIG. 2A to FIG. 3B, the electronic device 200 may include a first housing 210, a second housing 220 slidably coupled in a designated direction (e.g., a direction ① or a direction ②) (e.g., ± y-axis direction) from the first housing 210, and a rollable display 230 (e.g., a flexible display, an expandable display, or a stretchable display) disposed to be supported through at least a portion of the first housing 210 and the second housing 220. In one embodiment, the second housing 220 may be slidably coupled to the first housing 210 so as to be drawn out in a first direction (direction ①) or drawn in in a second direction (direction ②) opposite to the first direction (direction ①), with respect to the first housing 210. In one embodiment, the electronic device 200 may be changed to a slide-in state (e.g., a drawn-in state) by at least a portion of the second housing 220 being accommodated in at least a portion of a first space 2101 formed through the first housing 210. In one embodiment, the electronic device 200 may be changed to a slide-out state (e.g., a drawn-out state) by at least a portion of the second housing 220 being moved in an outward direction (e.g., direction ①) from the first space 2101. In one embodiment, the electronic device 200 may include a support member (e.g., a support member 240 of FIG. 4) (e.g., a bendable member, a bendable support member, a multi-joint hinge module, or a multi-bar assembly) which, in the slide-out state, at least partially forms the same plane as at least a portion of the second housing 220, and in the slide-in state, is accommodated in a manner of being bending into the first space 2101 of the first housing 210 at least partially. In one embodiment, at least a portion of the rollable display 230 may be disposed in a manner of being attached to at least a portion of the second housing 220. In one embodiment, at least a portion of a remaining portion of the rollable display 230 may be attached to the support member 240 (e.g., the support member 240 of FIG. 4). In one embodiment, at least a portion of the rollable display 230, in the slide-in state, may be disposed so as to be invisible from the outside by being accommodated in a manner of being bending into the first space 2101 of the first housing 210 while being supported by the support member (e.g., the support member 240 of FIG. 4). In one embodiment, at least a portion of the rollable display 230, in the slide-out state, may be disposed so as to be visible from the outside while being supported by the support member (e.g., the support member 240 of FIG. 4) forming at least partially the same plane as the second housing 220.

According to one embodiment, the electronic device 200 may include a first housing 210 including a first lateral member 211 and a second housing 220 including a second lateral member 221. In one embodiment, the first lateral member 211 may include a first side surface 2111 having a first length along a first direction (e.g., y-axis direction), a second side surface 2112 extending to have a second length shorter than the first length along a direction (e.g., x-axis direction) substantially perpendicular from the first side surface 2111, and a third side surface 2113 extending from the second side surface 2112 to be substantially parallel to the first side surface 2111 and having the first length. In one embodiment, the first lateral member 211 may be at least partially formed of a conductive member (e.g., metal). In some embodiments, the first lateral member 211 may be formed by a combination of a conductive member and a non-conductive member (e.g., polymer). In one embodiment, the first housing 210 may include a first extension member 212 extending from at least a portion of the first lateral member 211 to at least a portion of the first space 2101. In one embodiment, the first extension member 212 may be integrally formed with the first lateral member 211. In some embodiments, the first extension member 212 is formed separately from the first lateral member 211, and may be structurally coupled with the first lateral member 211.

According to one embodiment, the second lateral member 221 at least partially corresponds to the first side surface 2111, and may include a fourth side surface 2211 having a third length, a fifth side surface 2212 extending from the fourth side surface 2211 in a direction substantially parallel to the second side surface 2112 and having a fourth length shorter than the third length, and a sixth side surface 2213 extending from the fifth side surface 2212 so as to correspond to the third side surface 2113 and having the third length. In one embodiment, the second lateral member 221 may be at least partially formed of a conductive member (e.g., metal). In some embodiments, the second lateral member 221 may be formed by a combination of a conductive member and a non-conductive member (e.g., polymer). In one embodiment, at least a portion of the second lateral member 221 may include a second extension member 222 extending to at least a portion of a second space 2201 of the second housing 220. In one embodiment, the second extension member 222 may be integrally formed with the second lateral member 221. In some embodiments, the second extension member 222 is formed separately from the second lateral member 221, and may be structurally coupled with the second lateral member 221.

According to one embodiment, the first side surface 2111 and the fourth side surface 2211 may be slidably coupled with respect to each other. In one embodiment, the third side surface 2113 and the sixth side surface 2213 may be slidably coupled with respect to each other. In one embodiment, in the slide-in state, the fourth side surface 2211 is overlapped with the first side surface 2111, thereby being disposed to be substantially invisible from the outside. In one embodiment, in the slide-in state, the sixth side surface 2213 is overlapped with the third side surface 2113, thereby being disposed to be substantially invisible from the outside. In some embodiments, at least a portion of the fourth side surface 2211 and the sixth side surface 2213, in the slide-in state, may be disposed so as to be at least partially visible from the outside. In one embodiment, in the slide-in state, the second extension member 222 is overlapped with the first extension member 212, thereby being disposed to be substantially invisible from the outside. In some embodiments, the second extension member 222, in the slide-in state, may be disposed so as to be at least partially visible from the outside.

According to one embodiment, the first housing 210 may include a first rear cover 213 coupled with at least a portion of the first lateral member 211. In one embodiment, the first rear cover 213 may be disposed in a manner of being coupled with at least a portion of the first extension member 212. In some embodiments, the first rear cover 213 may be integrally formed with the first lateral member 211. In one embodiment, the first rear cover 213 may be formed by polymer, coated or colored glass, ceramic, metal (e.g., aluminum, stainless steel (STS), or magnesium), or a combination of at least two of these materials. In some embodiments, the first rear cover 213 may extend to at least a portion of the first lateral member 211. In some embodiments, the first rear cover 213 is omitted, and at least a portion of the first extension member 212 may be replaced with the first rear cover 213.

According to one embodiment, the second housing 220 may include a second rear cover 223 coupled with at least a portion of the second lateral member 221. In one embodiment, the second rear cover 223 may be disposed in a manner of being coupled with at least a portion of the second extension member 222. In some embodiments, the second rear cover 223 may be integrally formed with the second lateral member 221. In one embodiment, the second rear cover 223 may be formed by polymer, coated or colored glass, ceramic, metal (e.g., aluminum, stainless steel (STS), or magnesium), or a combination of at least two of these materials. In some embodiments, the second rear cover 223 may extend to at least a portion of the second lateral member 221. In some embodiments, the second rear cover 223 is omitted, and at least a portion of the second extension member 222 may be replaced with the second rear cover 223.

According to one embodiment, the rollable display 230 may include a first portion 230a (e.g., a flat portion) which is always visible from the outside and a second portion 230b (e.g., a flexible portion or a bending portion) extending from the first portion 230a and being accommodated in a manner of being at least partially bending into the first space 2101 of the first housing 210 so as not to be visible from the outside in the slide-in state. In one embodiment, the first portion 230a is disposed to be supported by the second housing 220, and the second portion 230b may be disposed to be at least partially supported by the support member (e.g., the support member 240 of FIG. 4). In one embodiment, the second portion 230b of the rollable display 230, in the slide-out state where the second housing 220 follows the first direction (direction ①), forms substantially the same plane as the first portion 230a while being supported by the support member (e.g., the support member 240 of FIG. 4), and may be disposed so as to be visible from the outside. In one embodiment, the second portion 230b of the rollable display 230, in the slide-in state where the second housing 220 follows the second direction (direction ②), may be accommodated in a manner of being bending into the first space 2101 of the first housing 210, and may be disposed so as not to be visible from the outside. Therefore, for the rollable display 230, a display surface area may be variable as the second housing 220 is moved in a sliding manner along a designated direction (e.g., ±y-axis direction) from the first housing 210.

According to one embodiment, for the rollable display 230, a length in the first direction (direction ①) may be variable according to sliding movement of the second housing 220 moved with respect to the first housing 210. For example, the rollable display 230, in the slide-in state, may have a first display surface area (e.g., an area corresponding to the first portion 230a) corresponding to a first length L1. In one embodiment, the rollable display 230, in the slide-out state, according to the sliding movement of the second housing 220 additionally moved by a second length L2 with respect to the first housing 210, corresponds to a third length L3 longer than the first length L1, and may be expanded to have a second display surface area (e.g., an area including the first portion 230a and the second portion 230b) larger than the first display surface area.

According to one embodiment, the electronic device 200 may include at least one of an input device (e.g., a microphone 203-1), a sound output device (e.g., a receiver for calls 206 and/or a speaker 207), a sensor module 204, 217, a camera module (e.g., a first camera module 205 or a second camera module 216), a connector port 208, a key input device 219, or an indicator (not illustrated) disposed in the second space 2201 of the second housing 220. In one embodiment, the electronic device 200 may include another input device (e.g., a microphone 203) disposed in the first housing 210. In some embodiments, the electronic device 200 may be configured such that at least one of the above-described components is omitted, or other components are additionally included. In some embodiments, at least one of the above-described components may be disposed in the first space 2101 of the first housing 210.

According to one embodiment, the input device may include the microphone 203-1. In some embodiments, the input device (e.g., the microphone 203-1) may include a plurality of microphones disposed so as to detect a direction of sound. The sound output device may include, for example, the receiver for calls 206 and the speaker 207. In one embodiment, the speaker 207, regardless of the slide-in/slide-out state, may correspond to the outside through at least one speaker hole formed in the second housing 220 at a position (e.g., the fifth side surface 2212) always exposed to the outside. In one embodiment, the connector port 208, in the slide-out state, may correspond to the outside through a connector port hole formed in the second housing 220. In some embodiments, the connector port 208, in the slide-in state, is formed in the first housing 210, and may correspond to the outside through an opening formed to correspond to the connector port hole. In some embodiments, the receiver for calls 206 may include a speaker (e.g., a piezo speaker) that is operated while a separate speaker hole is excluded.

According to one embodiment, the sensor module 204, 217 may generate an electrical signal or a data value corresponding to an internal operating state of the electronic device 200, or an external environmental state. In one embodiment, the sensor module 204, 217 may include, for example, a first sensor module 204 (e.g., a proximity sensor or an illuminance sensor) disposed on a front surface of the electronic device 200 and/or a second sensor module 217 (e.g., a heart rate monitoring (HRM) sensor) disposed on a rear surface of the electronic device 200. In one embodiment, the first sensor module 204 may be disposed below the rollable display 230 on the front surface of the electronic device 200. In one embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an IR (infrared) sensor, a biometric sensor, a temperature sensor, or a humidity sensor.

According to one embodiment, the camera module may include a first camera module 205 disposed on the front surface of the electronic device 200 and a second camera module 216 disposed on the rear surface of the electronic device 200. In one embodiment, the electronic device 200 may include a flash (not illustrated) positioned near the second camera module 216. In one embodiment, the camera modules 205, 216 may include one or a plurality of lenses, an image sensor, and/or an image signal processor. In one embodiment, the first camera module 205 is disposed below the rollable display 230, and may be configured so as to photograph a subject through a portion of an active area (e.g., a display area) of the rollable display 230.

According to one embodiment, a first camera module 205 among the camera modules, some sensor module 204 among the sensor modules 204, 217 may be disposed so as to detect an external environment through the rollable display 230. For example, the first camera module 205 or the some sensor module 204 may be disposed in the second space 2201 of the second housing 220 so as to be able to contact the external environment through a transmissive area or a perforated opening formed in the rollable display 230. In one embodiment, an area of the rollable display 230 facing the first camera module 205 is a portion of an active area displaying content, and may be formed as a transmissive area having a designated transmittance. In one embodiment, the transmissive area may be formed to have a transmittance in a range of about 5% to about 20%. Such a transmissive area may include an area overlapped with an effective area (e.g., a field of view area) of the first camera module 205, through which light for forming an image by being formed as an image by the image sensor passes. For example, the transmissive area of the rollable display 230 may include an area where an arrangement density of pixels and/or a wiring density is lower than surroundings. For example, the transmissive area may be replaced with the above-described opening. For example, some camera module 205 may include an under display camera (UDC). In some embodiments, some sensor module 204 may be disposed in the second space 2201 of the second housing 220 so as to perform the function thereof without being visually exposed through the rollable display 230.

According to one embodiment, the electronic device 200 may include at least one antenna element (e.g., an antenna element 224b of FIG. 4) electrically connected to a wireless communication circuit (e.g., the wireless communication module 192 of FIG. 1) disposed in an internal space (e.g., the second space 2201 of the second housing 220). In one embodiment, the electronic device 200 may include a bezel antenna A disposed through at least a portion of the conductive first lateral member 211 of the first housing 210. For example, the bezel antenna (A) is disposed through at least a portion of the second side surface 2112 and the third side surface 2113 of the first lateral member 211, and may include a conductive portion 227 (e.g., a conductive member) electrically segmented through at least one segmenting portion 2271 and 2272 formed of a non-conductive material (e.g., polymer). In one embodiment, the wireless communication circuit (e.g., the wireless communication module 192 of FIG. 1) may be set to transmit or receive a wireless signal in at least one designated frequency band (e.g., about 600MHz to 9000MHz) (e.g., legacy band or NR band) through the conductive portion 227. In one embodiment, the electronic device 200 may include a side cover 2112a disposed on the second side surface 2112 in order to cover at least a portion of the at least one segmenting portion 2271. In some embodiments, the bezel antenna A may be disposed on at least one side surface among the first side surface 2111, the second side surface 2112, or the third side surface 2113. In some embodiments, the bezel antenna A may be disposed on at least one side surface among the fourth side surface 2211, the fifth side surface 2212, or the sixth side surface 2213 of the second housing 220. In some embodiments, the electronic device 200 is disposed in an internal space (e.g., the first space 2101 or the second space 2201), and may further include at least one antenna module (e.g., mmWave antenna module or mmWave antenna structure) disposed to transmit or receive a wireless signal in a frequency band in a range of about 3GHz ~ 100GHz, through another wireless communication circuit (e.g., the wireless communication module 192 of FIG. 1).

According to one embodiment, the slide-in/slide-out operation of the electronic device 200 may be automatically performed. For example, the slide-in/slide-out operation of the electronic device 200 may be performed through gear coupling of a driving motor (e.g., a driving motor 260 of FIG. 4) including a pinion gear (e.g., a pinion gear 261 of FIG. 4) disposed in the first space 2101 of the first housing 210, and a rack gear (e.g., a rack gear 2221 of FIG. 4) which is disposed in the second space 2201 of the second housing 220 and which is gear-coupled with the pinion gear 261. In some embodiments, the driving motor 260 including the pinion gear 261 is disposed in the second space 2201 of the second housing 220, and the rack gear 2221 coupled with the pinion gear 261 may be disposed in the first space 2101 of the first housing 210. For example, a processor (e.g., a processor 120 of FIG. 1) of the electronic device 200, when detecting a triggering signal for changing from the slide-in state to the slide-out state, or changing from the slide-out state to the slide-in state, may operate a driving motor (e.g., the driving motor 260 of FIG. 4) disposed inside the electronic device 200. In one embodiment, the triggering signal may include a signal according to selection (e.g., touch) of an object displayed on the rollable display 230 or a signal according to manipulation of a physical button (e.g., a key button) included in the electronic device 200. In some embodiments, the slide-in/slide-out operation of the electronic device 200 may also be manually performed through manipulation of a user.

According to one embodiment, the electronic device 200 has a structure in which the second housing 220 is slide-in and/or slide-out with respect to the first housing 210 along a longitudinal direction (e.g., a vertical direction) (e.g., ± y-axis direction) of the electronic device 200, but is not limited thereto. For example, the electronic device 200 may also have a structure in which the second housing 220 is slide-in and/or slide-out with respect to the first housing 210 along a width direction (e.g., a horizontal direction) (e.g., ± x-axis direction) perpendicular to the longitudinal direction of the electronic device 200. In some embodiments, the electronic device 200 may be formed such that a length of the second side surface 2112 of the first housing 210 is longer than a length of the first side surface 2111. In such a case, a length of the fifth side surface 2212 of the second housing 220 may also be formed longer than a length of the fourth side surface 2211 correspondingly.

FIG. 4 is an exploded perspective view of an electronic device according to one embodiment of the present disclosure.

In describing the electronic device 200 of FIG. 4, the same reference numerals are assigned to components substantially the same as those of the electronic device 200 of FIG. 2A to FIG. 3B, and the detailed description thereof may be omitted.

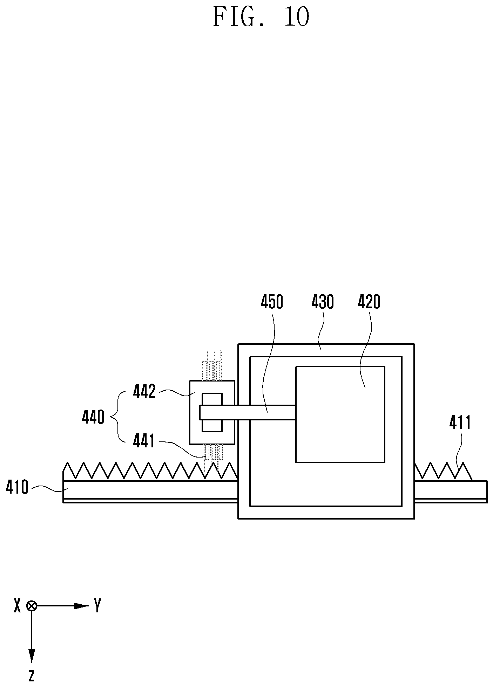

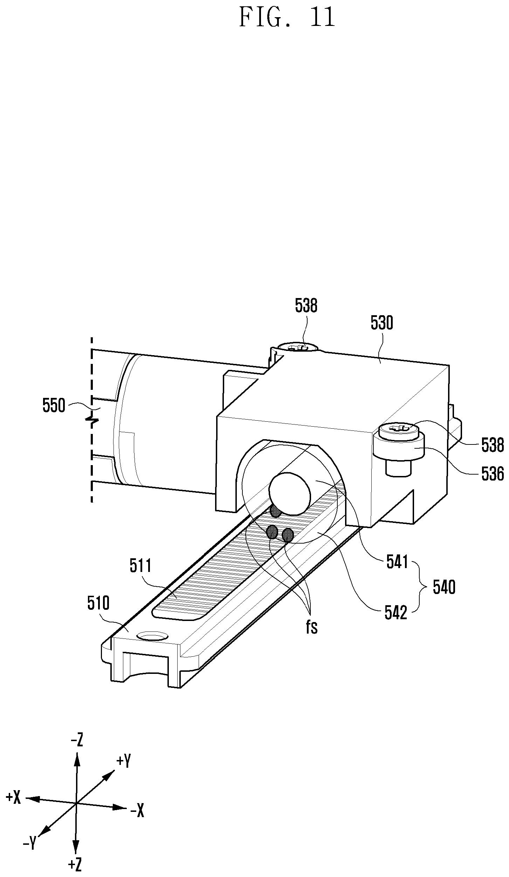

With reference to FIG. 4, the electronic device 200 may include a first housing 210 including a first space 2101, a second housing 220 slidably coupled from the first housing 210 and including a second space 2201, a support member 240 fixed to at least a portion of the second housing 220 and being accommodated so as to be at least partially bendable into the first space 2101 according to a slide-in operation, a rollable display 230 disposed to be supported by at least a portion of the support member 240 and the second housing 220, and a driving module (e.g., a driving mechanism) driving the second housing 220 in a slide-in direction (e.g., -y-axis direction) and/or a slide-out direction (e.g., y-axis direction) from the first housing 210. In one embodiment, the first housing 210 may include a first lateral member 211 and a first rear cover 213 coupled with at least a portion of the first lateral member 211 (e.g., at least a portion of a first extension member 212). In one embodiment, the second housing 220 may include a second lateral member 221 and a second rear cover 223 coupled with at least a portion of the second lateral member 221 (e.g., at least a portion of a second extension member 222). In one embodiment, the driving module may include a driving motor 260 which is disposed in the first space 2101 and which includes a pinion gear 261, and a rack gear 2221 disposed so as to be gear-coupled with the pinion gear 261 in the second space 2201. In one embodiment, the driving module may further include a reduction module (e.g., a reduction gear assembly) disposed so as to reduce a rotational speed and increase driving force by being coupled with the driving motor 260. In one embodiment, the driving motor 260 may be disposed to be supported through a motor bracket 260a (e.g., a frame 430 of FIG. 10, a frame 530 of FIG. 11) disposed on a support bracket 225 disposed in the first space 2101 of the first housing 210. In one embodiment, the driving motor 260 may be fixed to an end (e.g., an edge) of the support bracket 225 in a slide-out direction (e.g., y-axis direction) in the first space 2101. In one embodiment, the rack gear 2221 may be disposed in a manner of being fixed to the second extension member 222 of the second housing 220. In some embodiments, the rack gear 2221 may be integrally formed in a manner of being injection-molded into at least a portion of the second extension member 222. In one embodiment, the rack gear 2221 may be disposed to have a length in a direction parallel to a sliding direction (e.g., ± y-axis direction). Therefore, when the electronic device 200 is assembled, the pinion gear 261 may maintain a state of being gear-coupled with the rack gear 2221, and the pinion gear 261 provided with driving force of the driving motor 260 is moved along the rack gear 2221, whereby, as a result, the second housing 220 may be moved with respect to the first housing 210. In one embodiment, a sliding distance of the second housing 220 may be determined by the length of the rack gear 2221.

According to one embodiment, the electronic device 200 may include a plurality of electronic components disposed in the second space 2201. In one embodiment, the plurality of electronic components may include a first substrate 251 (e.g., a main substrate), a camera module 216 disposed around the first substrate 251, a speaker 207, a connector port 208, and a microphone 203-1. In one embodiment, since the plurality of electronic components are disposed around the first substrate 251 in the second space 2201 of the second housing 220, efficient electrical connection may be possible. In some embodiments, at least one among the above-described plurality of electronic components may be disposed in the first space 2101 of the first housing 210.

According to one embodiment, the electronic device 200 may include a rear bracket 224 disposed between the second extension member 222 and the second rear cover 223 in the second housing 220. In one embodiment, the rear bracket 224 may be disposed so as to cover at least a portion of the plurality of electronic components. In one embodiment, the rear bracket 224 may be structurally coupled with at least a portion of the second extension member 222. In some embodiments, the rear bracket 224 may be omitted. In one embodiment, the rear bracket 224 covers the plurality of electronic components, and may be disposed to support the second rear cover 223. In one embodiment, the rear bracket 224 may include an opening 224a (e.g., a through-hole) or a notch area 224c (e.g., a cutting portion) formed in an area corresponding to the camera module 216 and/or a sensor module (e.g., a sensor module 217 of FIG. 3B). In one embodiment, the rear bracket 224 may include at least one antenna element 224b. In one embodiment, when the rear bracket 224 is formed of an injection-molded product (e.g., an antenna carrier) of a dielectric material, the at least one antenna element 224b may be disposed on an outer surface. In one embodiment, the at least one antenna element 224b may include an LDS (laser direct structuring) antenna pattern formed on the outer surface of the rear bracket 224. In some embodiments, the at least one antenna element 224b may include a conductive plate attached to the outer surface of the rear bracket 224, a conductive paint formed on the outer surface, or a conductive pattern. In some embodiments, the at least one antenna element 224b may be disposed in a manner of being embedded when the rear bracket 224 is injection-molded. In one embodiment, the at least one antenna element 224b is electrically connected to a wireless communication circuit (e.g., the wireless communication module 192 of FIG. 1) disposed on the first substrate 251, thereby being set to transmit or receive a wireless signal in a designated frequency band (e.g., legacy band). In one embodiment, the camera module 216 and/or the sensor module 217 may be disposed so as to detect the external environment through the opening 224a or the notch area 224c In one embodiment, for the second rear cover 223, at least an area corresponding to the camera module 216 and/or the sensor module 217 may be processed to be transparent. In some embodiments, the second rear cover 223 may include a through-hole formed in at least an area corresponding to the camera module 216 and/or the sensor module 217. In such a case, the through-hole may be covered through a transparent window. In some embodiments, the camera module 216 and/or the sensor module 217 may be configured so as to operate only when the electronic device 200 is in the slide-out state.

According to one embodiment, the electronic device 200 may include a support bracket 225 disposed in the first space 2101 of the first housing 210. In one embodiment, the support bracket 225 is disposed at one end, and may include a support portion 2252 having an outer surface formed in a curved shape in order to support a back surface of the support member 240 that is bending during a sliding operation transitioning from the slide-out state to the slide-in state. In one embodiment, the support bracket 225 may include a support structure to support and fix the driving motor 260 through the motor bracket 260a. In one embodiment, the support bracket 225 may include a battery seating portion 2251 for accommodating a battery. In one embodiment, the driving motor 260 may be disposed at a most end (e.g., edge) in a slide-out direction (e.g., y-axis direction) in the support bracket 225. For example, when assembly of the electronic device 200 is completed, the driving motor 260 is disposed at a position closest to the first substrate 251 among electronic components disposed in the first housing 210, thereby being able to help minimize a size and/or a length of a flexible substrate F1 (e.g., a flexible printed circuit board (FPCB)) electrically connecting the first substrate 251 and the driving motor 260. In one embodiment, the electronic device 200 may include a pair of guide rails 226 for guiding both ends of the support member 240 in a sliding direction by being disposed on both side surfaces of the support bracket 225.

According to one embodiment, the first housing 210 may include an opening 212a (e.g., a through-hole) disposed in an area of the first extension member 212 corresponding to the camera module 216 and/or the sensor module 217 disposed in the second housing 220, when the electronic device 200 is in the slide-in state. In one embodiment, the camera module 216 and/or the sensor module 217, when the electronic device 200 is in the slide-in state, may detect the external environment through the opening 212a formed in the first housing 210. In some embodiments, an area of the first rear cover 213 corresponding to the camera module 216 and/or the sensor module 217 may also be processed to be transparent.

According to one embodiment, the electronic device 200 may include a second substrate 252 (e.g., a sub-substrate) and an antenna member 253 disposed between the first extension member 212 and the first rear cover 213 in the first housing 210. In one embodiment, the second substrate 252 and the antenna member 253 may be disposed on at least a portion of the first extension member 212. In one embodiment, the second substrate 252 and the antenna member 253 may be electrically connected to the first substrate 251 through at least one electrical connection member (e.g., FPCB, flexible printed circuit board or FRC, flexible RF cable). In one embodiment, the antenna member 253 may include an MFC (multi-function coil or multi-function core) antenna for performing a wireless charging function, an NFC (near field communication) function, and/or an electronic payment function. In some embodiments, the antenna member 253 is electrically connected to the second substrate 252, thereby being electrically connected to the first substrate 251 through the second substrate 252. In some embodiments, the second substrate 252 and/or the antenna member 253 may also be electrically connected to the first substrate 251 through at least a portion of the flexible substrate F1 connecting the driving motor 260 and the first substrate 251.

According to one embodiment, the support member 240 may be guided through the guide rail 226 during a slide-in/slide-out operation. In one embodiment, the support member 240 may include a plurality of multi-bars 241 rotatably coupled with respect to each other and a guide protrusion 2411 formed to protrude at both ends of each of the multi-bars 241. In one embodiment, the guide rail 226 may include a guide slit 2261 formed at a position corresponding to a movement trajectory of the support member 240. In one embodiment, when the support member 240 fixed in a manner of being attached to a back surface of the rollable display 230 is movably coupled with the guide rail 226, the guide protrusion 2411 is moved along the guide slit 2611, thereby being able to help reduce a phenomenon in which the rollable display 230 is detached or deformed during operation.

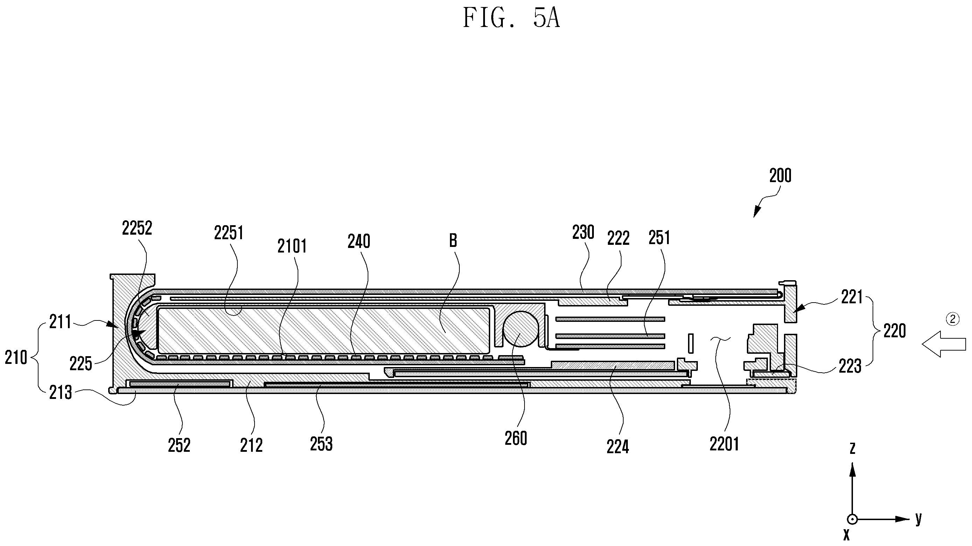

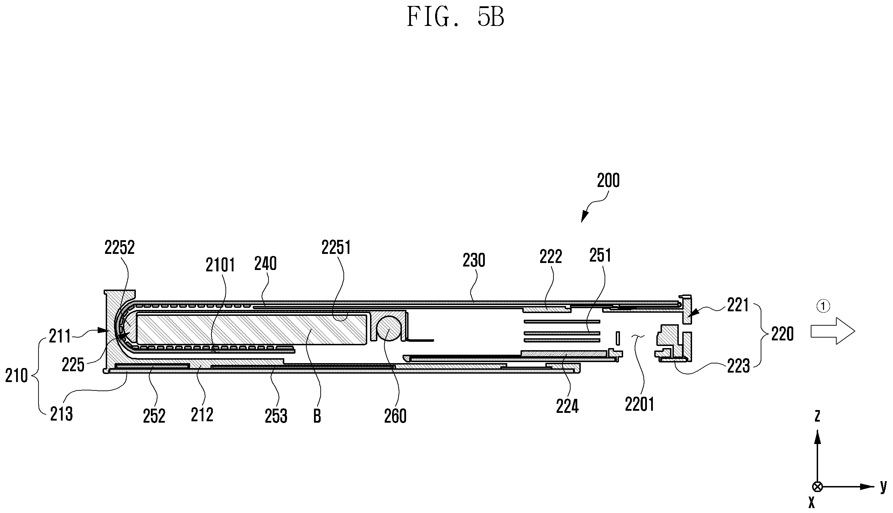

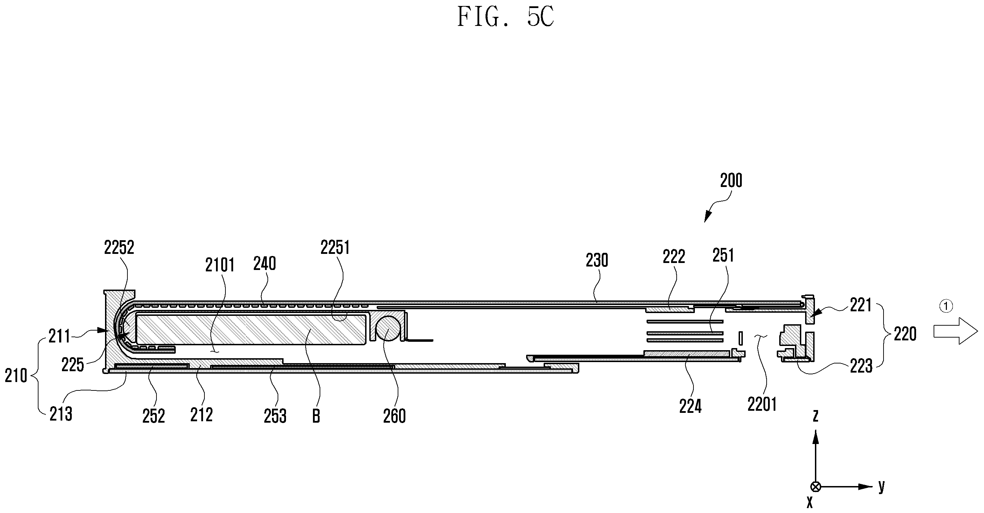

FIG. 5A is a cross-sectional view of the electronic device viewed along a line 5a-5a of FIG. 2A according to one embodiment of the present disclosure. FIG. 5B is a cross-sectional view of the electronic device in an intermediate state according to one embodiment of the present disclosure. FIG. 5C is a cross-sectional view of the electronic device viewed along a line 5c-5c of FIG. 3A according to one embodiment of the present disclosure.

In describing the electronic device 200 of FIG. 5A to FIG. 5C, the same reference numerals are assigned to components substantially the same as those of the electronic device 200 of FIG. 4, and the detailed description thereof may be omitted.

With reference to FIG. 5A to FIG. 5C, the electronic device 200 may include a first housing 210 having a first space 2101, a second housing 220 having a second space 2201, a support member 240 connected to the second housing 220 and being at least partially accommodated in the first space 2101 in the slide-in state, a rollable display 230 disposed to be supported by at least a portion of the support member 240 and at least a portion of the second housing 220, and a driving motor 260 which is disposed in the first space 2101 and which includes a pinion gear (e.g., a pinion gear 261 of FIG. 4) gear-coupled with a rack gear (e.g., a rack gear 2221 of FIG. 4) of the second space 2201. In one embodiment, the driving motor 260 may automatically move the second housing 220 in a slide-in direction (direction ②) or a slide-out direction (direction ①) with respect to the second housing 220 through the gear coupling of the pinion gear (e.g., the pinion gear 261 of FIG. 4) and the rack gear 2221 (e.g., the rack gear 2221 of FIG. 4).

According to one embodiment, for the second housing 220, in the slide-in state (state of FIG. 5A) of the electronic device 200, at least a portion thereof may be accommodated in the first space 2101 of the first housing 210. In one embodiment, at least a portion of the rollable display 230 is accommodated in a manner of being bending into the first space 2101 together with the support member 240, thereby being disposed so as not to be visible from the outside. In such a case, for the rollable display 230, a first display surface area (e.g., a display area corresponding to the first portion 230a of FIG. 3A) may be exposed to the outside.

According to one embodiment, the electronic device 200, by controlling driving of the driving motor 260, may be transitioned from the intermediate state (state of FIG. 5B) to the slide-out state (state of FIG. 5C). In some embodiments, the electronic device 200 may also be set so as to stop at a designated intermediate state between the slide-in state and the slide-out state (free stop function). In some embodiments, the electronic device 200, in a state where driving force is not provided to the driving motor 260, may be transitioned to the slide-in state, the intermediate state, or the slide-out state through manipulation of a user.

According to one embodiment, at least a portion of the second housing 220, through driving of the driving motor 260, may be transitioned to the slide-out state where it is at least partially moved from the first housing 210 to the outside along a first direction (direction ①). In one embodiment, the rollable display 230, in the slide-out state (state of FIG. 5C) of the electronic device 200, is supported by the support bracket 225, and moves together with the support member 240, whereby a portion slide-in to the first space 2101 may be exposed so as to be at least partially visible from the outside. In such a case, for the rollable display 230, a second display surface area (e.g., a display area including the first portion 230a and the second portion 230b of FIG. 3A) expanded from the first display surface area may be exposed to the outside.

According to one embodiment, the electronic device 200 may include a battery B disposed through the battery seating portion 2251 of the support bracket 225 fixed in the first space 2101 of the first housing 210. In one embodiment, since the battery B is disposed in the first housing 210, a separate driving gap for avoiding interference with surrounding structures according to movement may not be required. Therefore, for the battery B, a thickness is expanded in a manner of being close to or contacting a back surface of the support member 240 from the battery seating portion 2251 of the support bracket 225, whereby a battery volume is relatively increased, and by supporting the moved support member 240, a sagging phenomenon of the rollable display 230 is reduced, and it may help in improvement of operational reliability.

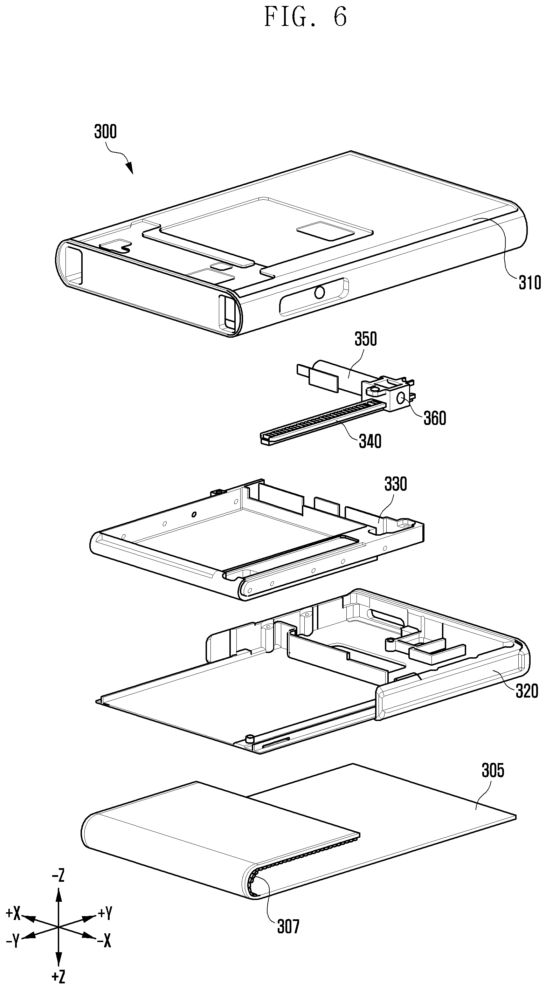

FIG. 6 is an exploded perspective view of an electronic device 300 according to one embodiment of the present disclosure.

The electronic device 300 of FIG. 6 refers to the electronic device 101 of FIG. 1, or may include at least a portion of components of the electronic device 101 of FIG. 1.

The electronic device 300 of FIG. 6 refers to the electronic device 200 of FIG. 2A to FIG. 5B,

or may include at least a portion of components of the electronic device 200 of FIG. 2A to FIG. 5B.

In describing the electronic device 300 according to one embodiment of the present disclosure, a width direction of the electronic device 300 may refer to X-axis direction, and a longitudinal direction of the electronic device 300 may refer to Y-axis direction. A height direction of the electronic device 300 may refer to Z-axis direction.

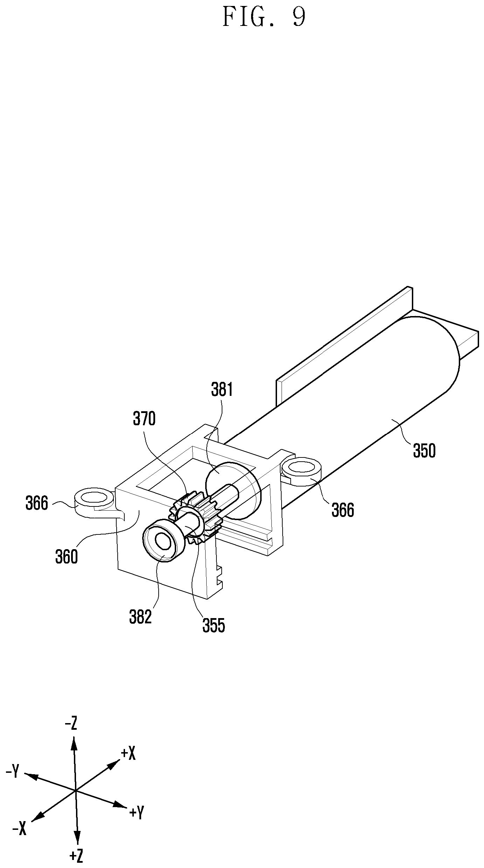

An electronic device 300 according to one embodiment of the present disclosure may include a flexible display 305, a support member 307, a first housing 310, a second housing 320, a support bracket 330, a rack gear 340, a driving motor 350, a pinion gear 370 (refer to FIG. 9), and/or a gear frame 360.

The flexible display 305 illustrated in FIG. 6 refers to the flexible display 230 illustrated in FIG. 4, or may include at least a portion of the flexible display 230.

In one embodiment, the flexible display 305 may be an area in charge of input and output of the electronic device 300.

In one embodiment, the flexible display 305 may be bent in at least a portion thereof.

In one embodiment, for the flexible display 305, a size of a display surface area which is a portion visible to the outside may increase or decrease according to movement of the second housing 320 with respect to the first housing 310.

In one embodiment, the flexible display 305 may be disposed such that at least a portion thereof is supported by the first housing 310 and the second housing 320.

In one embodiment, the support member 307 may include a multi-bar assembly for supporting the flexible display 305. The support member 307 includes a plurality of bars, and may be attached with the flexible display 305 by using an adhesive. One side and the other side of the support member 307 may be connected to a guide rail 226 (refer to FIG. 4).

The first housing 310 illustrated in FIG. 6 refers to the first housing 210 illustrated in FIG. 4, or may include at least a portion of the first housing 210.

In one embodiment, the first housing 310 may be a part forming an external appearance of the electronic device 300.

In one embodiment, the flexible display 305 may be disposed in at least a portion of the first housing 310. The first housing 310 may support the flexible display 305. A battery (e.g., the battery (B) of FIG. 4) and a printed circuit board (e.g., the substrate 252 of FIG. 4) may be disposed in at least a portion of the first housing 310.

In one embodiment, the first housing 310 may be an area to be gripped by a user of the electronic device 300.

In one embodiment, the support bracket 330 may be disposed inside the first housing 310.

In one embodiment, the second housing 320 may support the flexible display 305, and a component of the electronic device 300 (e.g., a printed circuit board) may be disposed therein.

In one embodiment, as the second housing 320 is slidingly moved with respect to the first housing 310, a relative position of the support bracket 330 and the second housing 320 may be changed.

The rack gear 340 illustrated in FIG. 6 refers to the rack gear 2221 illustrated in FIG. 4, or may include at least a portion of the rack gear 2221.

In one embodiment, the rack gear 340 may be disposed in the second housing 320. The rack gear 340 is at least partially engaged with a pinion gear 370 (refer to FIG. 9) and may be slidingly moved in the longitudinal direction (e.g., Y-axis direction) of the electronic device 300.

The driving motor 350 illustrated in FIG. 6 refers to the driving motor 260 illustrated in FIG. 4, or may include at least a portion of the driving motor 260.

In one embodiment, the driving motor 350 may be disposed in the first housing 310 or the second housing 320. For example, in one embodiment, the driving motor 350 may be disposed on the support bracket 330 disposed inside the first housing 310. In some embodiments, the driving motor 350 may be disposed in at least a portion of the second housing 320.

In one embodiment, the driving motor 350 may generate rotational force. The rotational force generated from the driving motor 350 may be transmitted to the pinion gear 370 (refer to FIG. 9).

In one embodiment, the pinion gear 370 (refer to FIG. 9) may be connected to at least a portion of the driving motor 350.

In one embodiment, the gear frame 360 may be disposed such that at least a portion thereof surrounds the pinion gear 370 (refer to FIG. 9). The gear frame 360 may serve to protect the pinion gear 370 (refer to FIG. 9).

In one embodiment, the pinion gear 370 (refer to FIG. 9) may be rotated by receiving the rotational force generated from the driving motor 350.

In one embodiment, at least a portion of the pinion gear 370 (refer to FIG. 9) may be disposed in the rack gear 340. For example, a portion of the pinion gear 370 (refer to FIG. 9) may be disposed so as to be engaged with the rack gear 340.

In one embodiment, the rack gear 340 and the driving motor 350 may be disposed at different positions. For example, when the rack gear 340 is disposed in a moving portion (e.g., the second housing 320), the driving motor 350 may be disposed in a fixed portion (e.g., the first housing 310). When the rack gear 340 is disposed in the fixed portion (e.g., the first housing 310), the driving motor 350 may be disposed in the moving portion (e.g., the second housing 320).

In one embodiment, the rack gear 340 is disposed in the second housing 320, and the driving motor 350, the pinion gear 370, and the gear frame 360 may be disposed on the support bracket 330. When the driving motor 350, the pinion gear 370, and the gear frame 360 are disposed on the support bracket 330, the rack gear 340 may be moved relative to the first housing 310 like the second housing 320.

In one embodiment, the rack gear 340 is disposed on the support bracket 330, and the driving motor 350, the pinion gear 370, and the gear frame 360 may be disposed in the second housing 320. When the rack gear 340 is disposed on the support bracket 330, the driving motor 350, the pinion gear 370, and the gear frame 360 may be moved relative to the first housing 310 like the second housing 320.

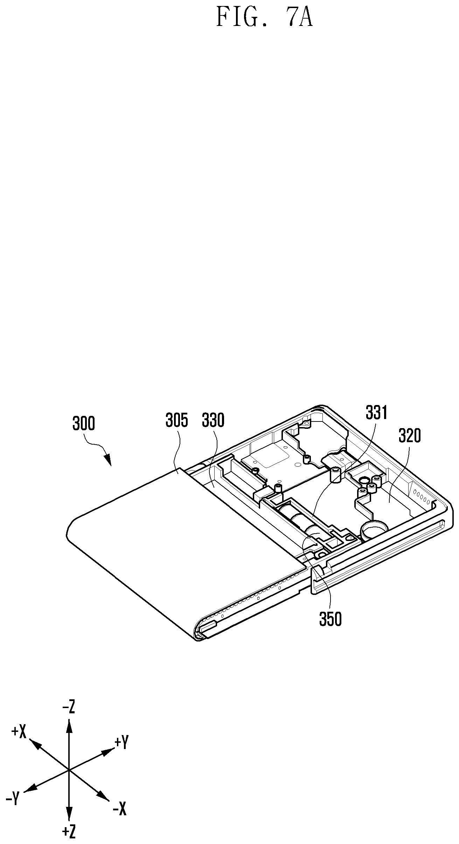

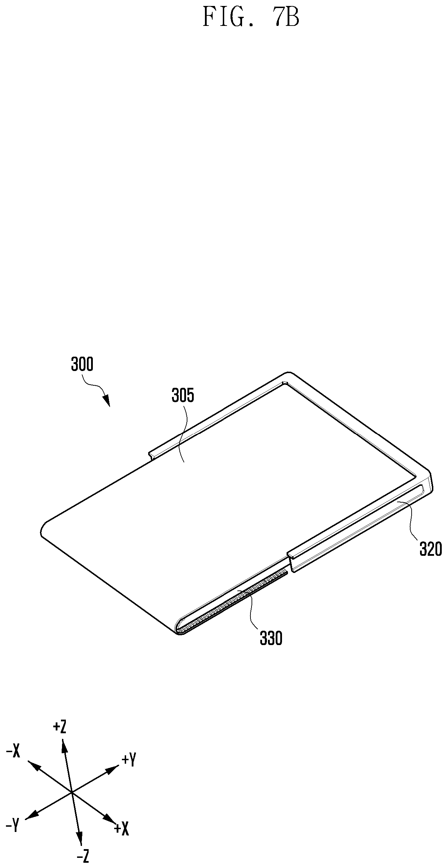

FIG. 7A and FIG. 7B are views illustrating a portion of an electronic device 300 in a slide-in state according to one embodiment of the present disclosure.

FIG. 7A is a view illustrating a rear surface (e.g., a surface facing a negative z-axis direction) of a portion of the electronic device 300 in a slide-in state according to this one embodiment.

FIG. 7B is a view illustrating a front surface (e.g., a surface facing a positive z-axis direction) of a portion of the electronic device 300 in a slide-in state according to one embodiment.

With reference to FIG. 7A, a driving motor 350 may be disposed in at least a portion of the support bracket 330. In one embodiment, the support bracket 330 may include a structure in which an electronic component (e.g., the driving motor 350) may be disposed therein. For example, with reference to FIG. 7A, the support bracket 330 may include a seating portion 331 in at least a portion thereof. The driving motor 350 may be disposed in the seating portion 331 of the support bracket 330.

With reference to FIG. 7A and FIG. 7B, a flexible display 305 may be disposed in at least a portion of the support bracket 330. For example, the flexible display 305 may be disposed so as to surround one surface (e.g., a surface facing a negative Z-axis direction) of the support bracket 330, the other surface (e.g., a surface facing a positive Z-axis direction) of the support bracket 330, and one side (e.g., a side surface facing a negative Y-axis direction) of the support bracket 330.

With reference to FIG. 7A and FIG. 7B, in the slide-in state of the electronic device 300, at least a portion of the support bracket 330 may be disposed in the second housing 320.

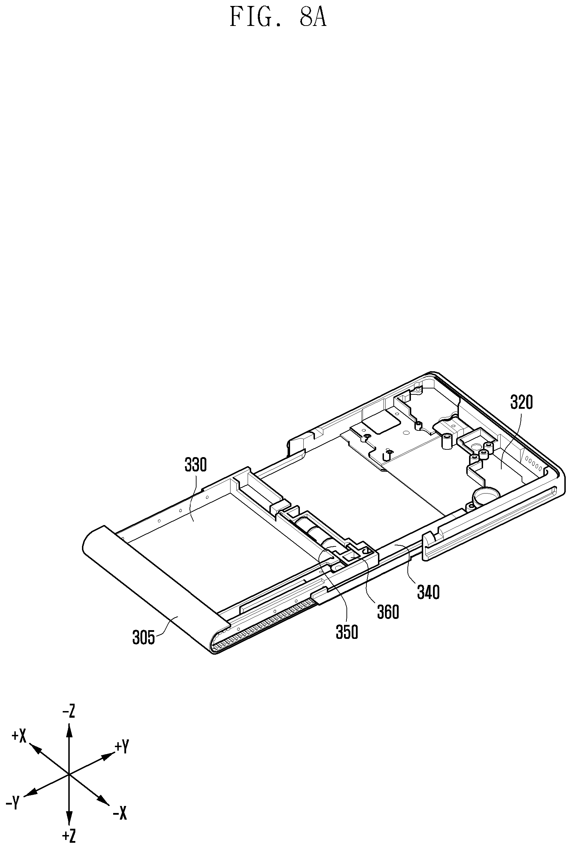

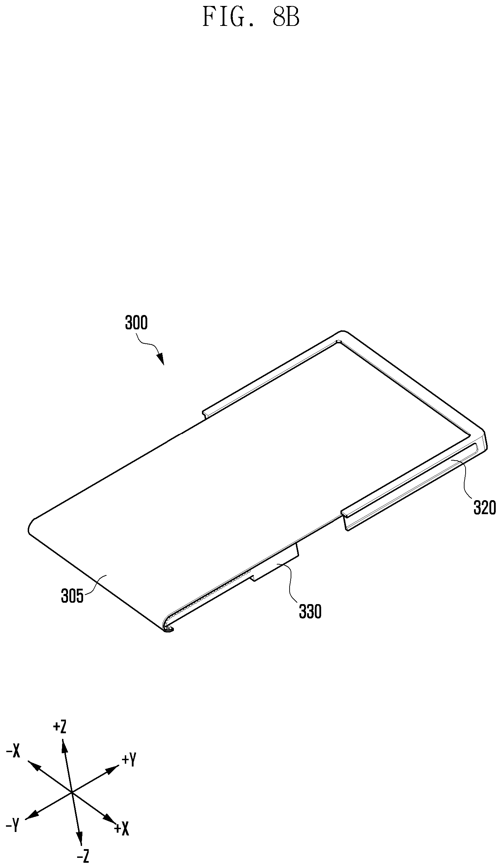

FIG. 8A and FIG. 8B are views illustrating a portion of an electronic device 300 in a slide-out state according to one embodiment of the present disclosure.

FIG. 8A is a view illustrating a rear surface (e.g., a surface facing a negative Z-axis direction) of a portion of the electronic device 300 in a slide-out state according to one embodiment.

FIG. 8B is a view illustrating a front surface (e.g., a surface facing a positive Z-axis direction) of a portion of the electronic device 300 in a slide-out state according to one embodiment.

With reference to FIG. 8A and FIG. 8B, the first housing 310 may be slidingly moved in the longitudinal direction (e.g., Y-axis direction) of the electronic device 300.

With reference to FIG. 8A, a rack gear 340 may be disposed in at least a portion of the second housing 320. For example, the rack gear 340 may be disposed at one side of one surface (e.g., a surface facing a negative z-axis direction) of the second housing 320.

In one embodiment, a pinion gear 370 (refer to FIG. 9) and a gear frame 360 surrounding the pinion gear 370 (refer to FIG. 9) may be positioned on one surface (e.g., a surface facing a negative z-axis direction) of the rack gear 340.

In one embodiment, when the second housing 320 is slidingly moved with respect to the first housing 310, the rack gear 340 may be moved like the second housing 320. As the rack gear 340 is moved, a relative position of the rack gear 340 and the pinion gear 370 (refer to FIG. 9) may be varied.

In one embodiment, the rack gear 340 may linearly move in the longitudinal direction (e.g., Y-axis direction) of the electronic device 300 by being linked with rotational motion of the pinion gear 370 (refer to FIG. 9).

With reference to FIG. 8B, as the second housing 320 is moved in a direction getting away from the first housing 310, a display surface area of the flexible display 305 may be expanded.

FIG. 9 is a view illustrating a driving motor 350 and a pinion gear 370 according to one embodiment of the present disclosure.

In one embodiment, the driving motor 350 may generate rotational force. The rotational force generated from the driving motor 350 may be transmitted to the pinion gear 370.

In one embodiment, the pinion gear 370 may be rotated by receiving rotational force from the driving motor 350.

In one embodiment, the pinion gear 370 may be engaged with at least a portion of the rack gear 340 (refer to FIG. 8A). Since the pinion gear 370 and the rack gear 340 (refer to FIG. 8A) are at least partially engaged, the rack gear 340 (refer to FIG. 8A) may linearly move by being linked with rotational motion of the pinion gear 370.

In one embodiment, the pinion gear 370 may be surrounded by the gear frame 360.

In one embodiment, the gear frame 360 may be disposed such that at least a portion thereof surrounds the pinion gear 370.

In one embodiment, the gear frame 360 may be coupled to an end of the motor 350. In one embodiment, the gear frame 360 may be a motor frame positioned at an end of the motor 350.

In one embodiment, the gear frame 360 may support a pinion gear shaft 355.

In one embodiment, the gear frame 360 may have support bearings 381, 382 disposed in at least a portion thereof. The support bearings 381, 382 are coupled with the pinion gear shaft 355, and may further facilitate rotation of the pinion gear shaft 355 and the pinion gear 370.

In one embodiment, the support bearings 381, 382 may include a first support bearing 381 and/or a second support bearing 382. The first support bearing 381 is disposed at one side of the gear frame 360, and the second support bearing 382 may be disposed at the other side of the gear frame 360.

In one embodiment, the gear frame 360 may serve to protect the pinion gear 370, and to prevent or reduce an external impact from being applied to the pinion gear 370.

In one embodiment, the gear frame 360 may include a coupling area 366 for fixing a position of the gear frame 360.

In one embodiment, a coupling member 538 (refer to FIG. 11) is coupled to the coupling area 366 of the gear frame 360, and the gear frame 360 may be fixed to another component of the electronic device 300 (refer to FIG. 6).

FIG. 10 is a view illustrating a frame 430 and a sweeper 440 according to one embodiment of the present disclosure.

In one embodiment, an electronic device (e.g., the electronic device 200 of FIG. 4, the electronic device 300 of FIG. 6) may include a rack gear 410, a pinion gear 420, a frame 430, a sweeper 440, and/or a connection portion 450 illustrated in FIG. 10.

In one embodiment, the rack gear 410 refers to the rack gear 340 of FIG. 6, or may include at least a portion of the rack gear 340.

In one embodiment, the pinion gear 420 refers to the pinion gear 370 of FIG. 9, or may include at least a portion of the pinion gear 370.

In one embodiment, the frame 430 refers to a component (e.g., a motor bracket, a motor housing) supporting or surrounding at least a portion of the driving motor 350 (refer to FIG. 9), or may include a component (e.g., a motor bracket, a motor housing) supporting or surrounding at least a portion of the driving motor 350 (refer to FIG. 9). For example, in one embodiment, the frame 430 may include a motor bracket supporting at least a portion of the driving motor 350 (refer to FIG. 9). In one embodiment, the frame 430 may include a motor housing surrounding at least a portion of the driving motor 350 (refer to FIG. 9).

In one embodiment, the frame 430 may be disposed so as to surround the pinion gear 420. In one embodiment, the frame 430 may be a gear frame protecting the pinion gear 420.

In one embodiment, the sweeper 440 may include a brush 441 and/or a body 442.

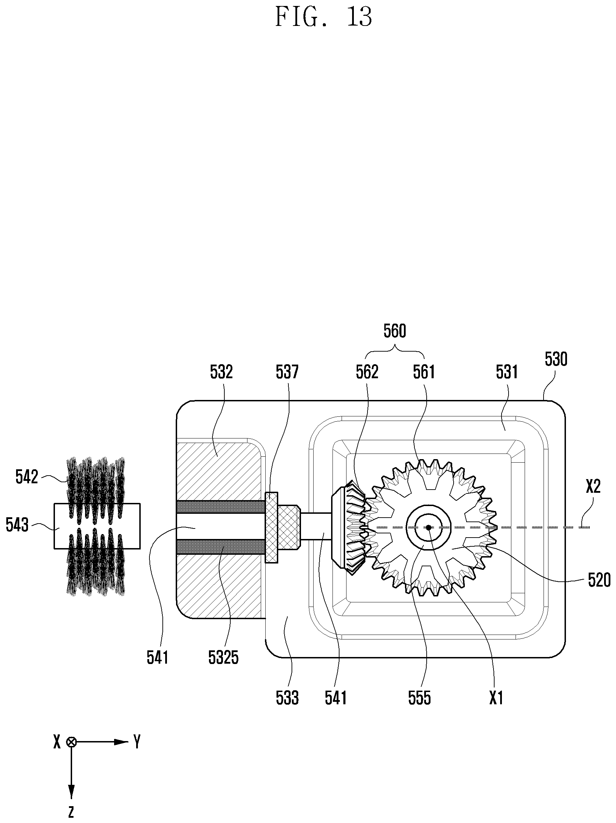

In one embodiment, the pinion gear 420 and the sweeper 440 may be connected through the connection portion 450. The connection portion 450 may include, for example, a bevel gear (e.g., a connecting gear 560 of FIG. 13) and/or a shaft (e.g., a sweeper shaft 541 of FIG. 13) connecting the pinion gear 420 and the sweeper 440.

In one embodiment, the connection portion 450 may be disposed such that at least a portion thereof is supported by the frame 430. The sweeper 440 may be disposed to be supported by the frame 430 indirectly through the connection portion 450.

In one embodiment, the pinion gear 420 may perform rotational motion. In one embodiment, the connection portion 450 may be rotated by being linked with the pinion gear 420.

In one embodiment, the sweeper 440 may be coupled to an end of the connection portion 450.

In one embodiment, the sweeper 440 may be rotated according to rotation of the connection portion 450.

In one embodiment, the brush 441 of the sweeper 440 may be coupled to the body 442 of the sweeper 440.

In one embodiment, the body 442 of the sweeper 440 may be detachably coupled to the connection portion 450.

In one embodiment, the rack gear 410 may include an engagement area 411 at least partially engaged with the pinion gear 420.

In one embodiment, the rack gear 410 may linearly move by being linked with rotational motion of the pinion gear 420. For example, the rack gear 410 may be moved in a positive Y-axis direction or a negative Y-axis direction by being linked with rotational motion of the pinion gear 420.

In one embodiment, the brush 441 may be in contact with at least a portion of the rack gear 410. For example, an end of the brush 441 heading for a positive Z-axis direction may be in contact with at least a portion of the rack gear 410.

In one embodiment, the brush 441 may serve to remove a foreign substance disposed on the rack gear 410. For example, when the rack gear 410 is moved, the brush 441 is in contact with at least a portion of the rack gear 410, thereby being able to push a foreign substance disposed on the rack gear 410 to the outside of the rack gear 410. A foreign substance disposed on the rack gear 410 is removed, and resistance between the rack gear 410 and the pinion gear 420 may be reduced.

In one embodiment, the brush 441 is rotated according to rotation of the connection portion 450, and may push a foreign substance disposed on the rack gear 410 to the outside of the rack gear 410.

FIG. 11 is a view illustrating a frame 530 and a sweeper 540 according to one embodiment of the present disclosure.

In one embodiment, an electronic device (e.g., the electronic device 200 of FIG. 4, the electronic device 300 of FIG. 6) may include a rack gear 510, a pinion gear 520 (refer to FIG. 13), a frame 530, a sweeper 540, and/or a driving motor 550 illustrated in FIG. 11.

In one embodiment, the rack gear 510 refers to the rack gear 340 of FIG. 6, or may include at least a portion of the rack gear 340.

In one embodiment, the driving motor 550 refers to the driving motor 350 of FIG. 6, or may include at least a portion of the driving motor 350.

In one embodiment, the frame 530 may be fixed to at least a portion of an electronic device (e.g., the electronic device 300 of FIG. 6). For example, the frame 530 may be fixed to a portion (e.g., the support bracket 330 of FIG. 6) of an electronic device (e.g., the electronic device 300 of FIG. 6) by using a coupling member 538. The coupling member 538 may be coupled to a coupling area 536 formed in the frame 530.

In one embodiment, the frame 530 refers to a component (e.g., a motor bracket, a motor housing) supporting or surrounding at least a portion of the driving motor 550, or may include a component (e.g., a motor bracket, a motor housing) supporting or surrounding at least a portion of the driving motor 550. For example, in one embodiment, the frame 530 may include a motor bracket supporting at least a portion of the driving motor 550. In one embodiment, the frame 530 may include a motor housing surrounding at least a portion of the driving motor 550.

In one embodiment, at least a portion of the frame 530 may be disposed so as to surround the pinion gear 520 (refer to FIG. 13).

In one embodiment, the driving motor 550 may transmit rotational force to the pinion gear 520 (refer to FIG. 13). The pinion gear 520 (refer to FIG. 13) may perform rotational motion by receiving rotational force from the driving motor 550.

In one embodiment, the sweeper 540 may include a sweeper shaft 541 and/or a brush 542.

In one embodiment, the sweeper shaft 541 may be rotated by being linked with the pinion gear 520 (refer to FIG. 13).

In one embodiment, the brush 542 may be coupled to an end of the sweeper shaft 541.

The brush 542 may be rotated according to rotation of the sweeper shaft 541.

In one embodiment, the brush 542 may be formed of a fiber material (e.g., nylon, carbon fiber, glass fiber, natural fiber), a polymer material (e.g., rubber, silicone), a metallic material (e.g., wire), and/or a natural material (e.g., hair).

In one embodiment, the sweeper 540 may be disposed to be supported by the frame 530. For example, the sweeper shaft 541 of the sweeper 540 may be supported by the frame 530. For example, the brush 542 of the sweeper 540 may be disposed to be supported indirectly by the frame 530 through the sweeper shaft 541.

In one embodiment, the sweeper 540 may not include the sweeper shaft 541. For example, the sweeper 540 according to one embodiment includes only a component (e.g., the brush 542) for removing a foreign substance, and may be a separate component distinguished from the sweeper shaft 541. In this case, the sweeper 540 may be disposed to be supported indirectly by the frame 530 through the sweeper shaft 541.

In one embodiment, the rack gear 510 may be formed by extending in one direction (e.g., Y-axis direction). The rack gear 510 may be at least partially engaged with the pinion gear 520 (refer to FIG. 13).

In one embodiment, the rack gear 510 may linearly move by being linked with rotational motion of the pinion gear 520 (refer to FIG. 13).

In one embodiment, the sweeper 540 may serve to remove a foreign substance (fs) disposed on the rack gear 510. The sweeper 540 is rotated and is in contact with at least a portion of the rack gear 510, thereby being able to move the foreign substance (fs) disposed on the rack gear 510 to the outside of the rack gear 510. For example, the brush 542 is rotated, and may push the foreign substance (fs) disposed on the rack gear 510 to the outside of the rack gear 510.

In one embodiment, when the second housing 320 (refer to FIG. 6) is moved relative to the first housing 310 (refer to FIG. 6), the rack gear 510 may be moved relative to the pinion gear 520 (refer to FIG. 13). When the rack gear 510 is moved, the brush 542 of the sweeper 540 is in contact with the rack gear 510, and may remove the foreign substance (fs) disposed on the rack gear 510.

In one embodiment, the foreign substance (fs) may include a foreign substance introduced from the outside of the electronic device 300 (refer to FIG. 6) and/or metallic (e.g., iron) dust generated due to wear of the rack gear 510 and the pinion gear 520 (refer to FIG. 13).

In one embodiment, the rack gear 510 may include an engagement area 511 engaged with the pinion gear 520 (refer to FIG. 13).

In one embodiment, the rack gear 510 may linearly move relative to the brush 542. As the rack gear 510 is linearly moved, a foreign substance accumulated in the engagement area 511 of the rack gear 510 may be removed by the brush 542.

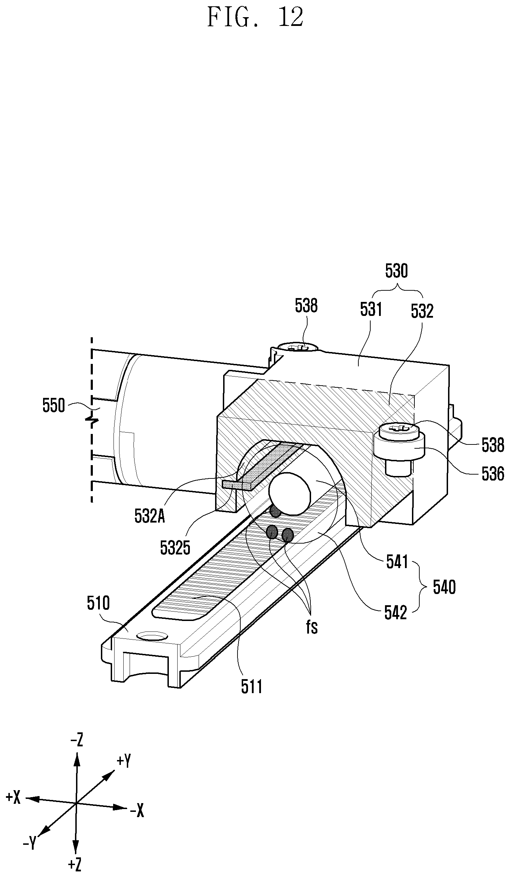

FIG. 12 is a view illustrating a foreign substance collection frame 532 according to one embodiment of the present disclosure.

In describing the component illustrated in FIG. 12, the same reference numerals are assigned to components substantially the same as the component illustrated in FIG. 11, and the detailed description thereof may be omitted.

In one embodiment, the frame 530 may include a gear frame 531 and/or a foreign substance collection frame 532.

In one embodiment, the gear frame 531 may be disposed so as to surround the pinion gear 520 (refer to FIG. 13). For example, the gear frame 531 may be formed in a structure including a surface, a curved surface, and/or a skeleton. For example, the gear frame 531 may be disposed so as to surround the pinion gear 520 (refer to FIG. 13) only at least partially. For example, the gear frame 531 may be formed in a structure in which at least a portion of the pinion gear 520 (refer to FIG. 13) is exposed.

In one embodiment, the foreign substance collection frame 532 may be disposed at one side of the gear frame 531.

In one embodiment, the foreign substance collection frame 532 may be integrally formed with the gear frame 531, or may be formed as a separate component separated from the gear frame 531.

In one embodiment, the foreign substance collection frame 532 may be detachably coupled to the gear frame 531.

In one embodiment, the foreign substance collection frame 532 may be disposed so as to surround at least a portion of the sweeper 540. For example, the foreign substance collection frame 532 may be disposed so as to surround the sweeper shaft 541 and the brush 542 of the sweeper 540 from the outside.

In one embodiment, an inner side surface 532A of the foreign substance collection frame 532 may refer to a surface facing the brush 542 of the sweeper 540 in the foreign substance collection frame 532.

In one embodiment, the foreign substance collection frame 532 may be a portion where a foreign substance removed from the rack gear 510 is collected.

In one embodiment, the foreign substance collection frame 532 may include a magnetic body 5325.

In one embodiment, the magnetic body 5325 may be formed such that at least a portion thereof protrudes from the inner side surface 532A of the foreign substance collection frame 532.

In one embodiment, the magnetic body 5325 may be disposed such that at least a portion thereof faces at the sweeper 540.

In one embodiment, the foreign substance (fs) disposed on the rack gear 510 may include a material having magnetism. For example, the foreign substance (fs) may have magnetism including metallic (e.g., iron) dust generated due to wear of the rack gear 510 and the pinion gear 520 (refer to FIG. 13).

In one embodiment, the foreign substance (fs) of the rack gear 510 may be pushed to the outside of the rack gear 510 by the brush 542. The brush 542 is rotated and may be in contact with at least a portion of the magnetic body 5325.

In one embodiment, since the foreign substance (fs) pushed from the rack gear 510 by the brush 542 includes a magnetic material, it may be attached to the magnetic body 5325. For example, the foreign substance (fs) may be attached to the magnetic body 5325 by attractive force acting between the foreign substance (fs) and the magnetic body 5325. Since the foreign substance (fs) is attached to the magnetic body 5325, it may be prevented or reduced that the foreign substance (fs) including metallic dust is scattered to another component (e.g., a printed circuit board) inside the electronic device 300 (refer to FIG. 6).

FIG. 13 is a view illustrating a gear frame 531 and a foreign substance collection frame 532 according to one embodiment of the present disclosure.

FIG. 13 may be a cross-sectional view illustrating the gear frame 531 and the foreign substance collection frame 532 viewed from a direction parallel to X-axis direction.

In one embodiment, an electronic device (e.g., the electronic device 200 of FIG. 4, the electronic device 300 of FIG. 6) may include a connecting gear 560 illustrated in FIG. 13.

In one embodiment, the frame 530 may include the gear frame 531, the foreign substance collection frame 532, and/or a partition wall 533.

In one embodiment, the sweeper 540 may include a sweeper shaft 541, a brush 542, and/or a body 543.

With reference to FIG. 13, a pinion gear 520 according to one embodiment may be disposed inside the gear frame 531.

In one embodiment, the connecting gear 560 may be a gear for transmitting rotational force to the sweeper 540.

In one embodiment, the connecting gear 560 may be a bevel gear transmitting rotational force between two axes intersecting at a right angle.

In one embodiment, the connecting gear 560 may include a first connecting gear 561 and/or a second connecting gear 562.

In one embodiment, a diameter of the first connecting gear 561 may be larger than a diameter of the pinion gear 520.

In one embodiment, a pinion gear shaft 555 and the pinion gear 520 coupled to the pinion gear shaft 555 may be rotated about a first rotation axis X1.

In one embodiment, the first connecting gear 561 and the pinion gear 520 may be coupled so as to have substantially the same rotation axis. For example, the first connecting gear 561 and the pinion gear 520 may be rotated about the first rotation axis X1.

In one embodiment, the pinion gear 520 and the first connecting gear 561 may be rotated together in the same direction.

In one embodiment, the second connecting gear 562 may be rotated by receiving rotational force from the first connecting gear 561. When the pinion gear 520 is rotated, the first connecting gear 561 is rotated like the pinion gear 520, and the rotational force of the first connecting gear 561 may be transmitted to the second connecting gear 562.

In one embodiment, the second connecting gear 562 may be rotated about a second rotation axis (X2). In one embodiment, the second rotation axis (X2) may be substantially perpendicular to the first rotation axis (X1).

In one embodiment, the second connecting gear 562 may be coupled with the sweeper shaft 541. The second connecting gear 562 is rotated, and the sweeper shaft 541 may also be rotated in the same direction as the second connecting gear 562.

In one embodiment, the foreign substance collection frame 532 may include a magnetic body 5325. For example, with reference to FIG. 13, the magnetic body 5325 may be positioned at a position corresponding to the sweeper shaft 541 in the foreign substance collection frame 532.

In one embodiment, the gear frame 531 and the foreign substance collection frame 532 may be positioned in spaces separated from each other. For example, the gear frame 531 may be separated from the foreign substance collection frame 532 by the partition wall 533.

In one embodiment, since the gear frame 531 is separated from the foreign substance collection frame 532 by the partition wall 533, it may be prevented that a foreign substance collected in the foreign substance collection frame 532 is introduced into the gear frame 531. Since it is prevented that a foreign substance is introduced into the gear frame 531, the pinion gear 520 may be driven without being influenced by a foreign substance.

In one embodiment, the frame 530 may include a bearing 537. The bearing 537 surrounds at least a portion of the sweeper shaft 541, and may be a fixing member serving to fix a position of the sweeper shaft 541 in the frame 530. The bearing 537 may further facilitate rotation of the sweeper shaft 541 coupled with the second connecting gear 562.

In one embodiment, the bearing 537 may be disposed in at least a portion of the partition wall 533. The sweeper shaft 541 may be disposed so as to pass through the bearing 537 disposed in the partition wall 533.

In one embodiment, the bearing 537 and the sweeper shaft 541 may serve to seal the gear frame 531. For example, the bearing 537 and the sweeper shaft 541 are disposed in at least a portion of the partition wall 533, whereby the gear frame 531 may be sealed.

In one embodiment, the brush 542 may be coupled to the body 543. The brush 542 may be coupled so as to surround a circumference of the body 543.

In one embodiment, the body 543 of the sweeper 540 may be detachably coupled to the sweeper shaft 541. Since the body 543 of the sweeper 540 is detachably coupled to the sweeper shaft 541, exchange and repair of the body 543 and the brush 542 coupled to the body 543 may be easy.

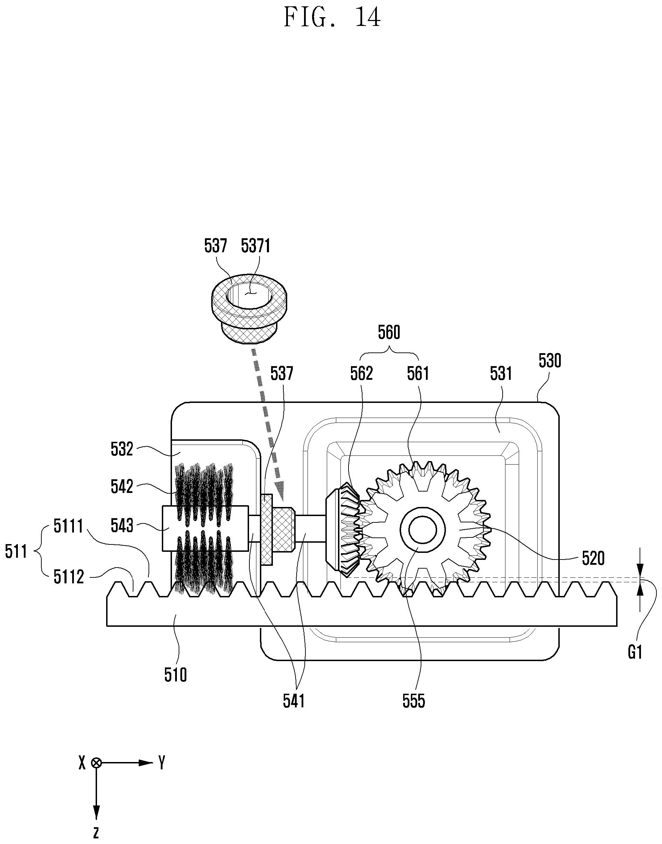

FIG. 14 is a view illustrating a rack gear 510, a sweeper 540, a gear frame 531, and a foreign substance collection frame 532 according to one embodiment of the present disclosure.

In describing the component illustrated in FIG. 14, the detailed description for a component substantially the same as the component illustrated in FIG. 13 may be omitted.

With reference to FIG. 14, the rack gear 510 may be disposed so as to be at least partially engaged with the pinion gear 520.

With reference to FIG. 14, a rack gear 510 according to one embodiment may be disposed so as to be at least partially in contact with the brush 542.

With reference to FIG. 14, a brush 542 according to one embodiment may be coupled to a portion of the sweeper shaft 541. The brush 542 may be rotated together according to rotation of the sweeper shaft 541.

In one embodiment, the engagement area 511 of the rack gear 510 may include a gear tooth 5111 and/or a gear root 5112. The gear tooth 5111 and the gear root 5112 may be alternately formed along the longitudinal direction (e.g., Y-axis direction).

In one embodiment, the brush 542 may be in contact with at least a portion of the rack gear 510. For example, the brush 542 may be in contact with the gear tooth 5111 and the gear root 5112 of the engagement area 511. The brush 542 may remove a foreign substance positioned at the gear tooth 5111 and the gear root 5112.

In one embodiment, the brush 542 may cause an adhesive lubricating material applied to the rack gear 510 to be applied to the rack gear 510 thinner and uniformly.

In one embodiment, the bearing 537 may include a bearing opening 5371. The sweeper shaft 541 may be disposed so as to pass through the bearing opening 5371.

In one embodiment, the bearing 537 may support the sweeper shaft 541, and may further facilitate rotation of the sweeper shaft 541.

In one embodiment, the sweeper shaft 541 may be disposed to be supported by the frame 530. For example, the sweeper shaft 541 may be supported by the bearing 537 of the frame 530.

In one embodiment, a diameter of the second connecting gear 562 may be smaller than a diameter of the pinion gear 520. Since the diameter of the second connecting gear 562 is smaller than the diameter of the pinion gear 520, the second connecting gear 562 may be spaced apart from the rack gear 510 by a first separation distance G1. Since the second connecting gear 562 and the rack gear 510 are spaced apart, the rack gear 510 may be moved without interference with the second connecting gear 562.

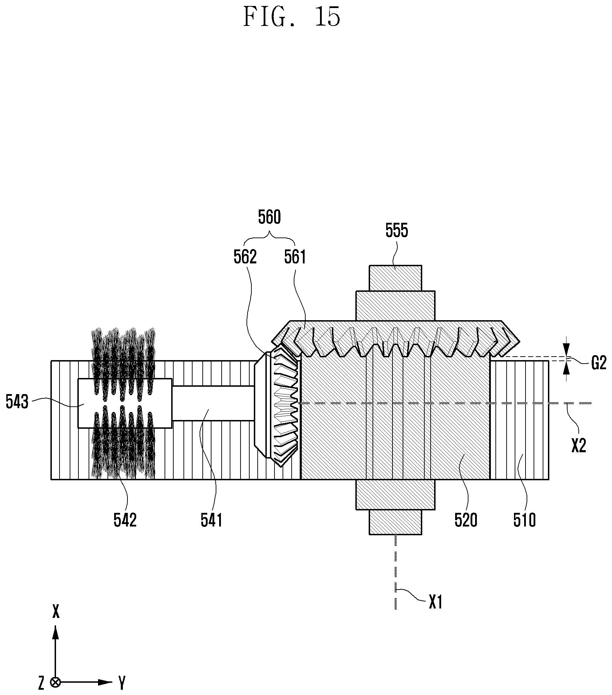

FIG. 15 is a view illustrating a connecting gear 560 according to one embodiment of the present disclosure.

With reference to FIG. 15, a first connecting gear 561 and a pinion gear 520 according to one embodiment may be integrally formed. The first connecting gear 561 and the pinion gear 520 integrally formed may be coupled to a pinion gear shaft 555.

In one embodiment, the first connecting gear 561 and the pinion gear 520 may be components formed separately from each other. For example, the first connecting gear 561 may be manufactured separately from the pinion gear 520, and then may be coupled to the pinion gear shaft 555.

In one embodiment, the pinion gear 520 and the first connecting gear 561 may be rotated in the same direction. For example, the pinion gear shaft 555 is rotated by the driving motor 550 (refer to FIG. 11), and the pinion gear 520 and the first connecting gear 561 coupled to the pinion gear shaft 555 may be rotated in a direction in which the pinion gear shaft 555 is rotated.

In one embodiment, the first connecting gear 561 and the pinion gear 520 may be rotated about a first rotation axis X1.

In one embodiment, rotation of the first connecting gear 561 may be transmitted to the second connecting gear 562. The second connecting gear 562 may be rotated by rotation of the first connecting gear 561.

In one embodiment, the second connecting gear 562 and the sweeper shaft 541 may be rotated about a second rotation axis X2.

In one embodiment, the second rotation axis X2 may be an axis perpendicular to the first rotation axis X1.

In one embodiment, the sweeper shaft 541 is rotated, and the body 543 and the brush 542 coupled to the sweeper shaft 541 may also be rotated together.

In one embodiment, the rack gear 510 may linearly move. For example, the rack gear 510 may be moved in a linear direction (e.g., Y-axis direction) relative to the pinion gear 520.

In one embodiment, the rack gear 510 may be moved in the linear direction, and a foreign substance positioned at the rack gear 510 may be removed from the rack gear 510 by the brush 542.

In one embodiment, the first connecting gear 561 may be spaced apart from the rack gear 510. For example, the first connecting gear 561 may be disposed with a gap by a second separation distance (G2) from the rack gear 510. Since the first connecting gear 561 and the rack gear 510 are spaced apart, even if the rack gear 510 is moved, the first connecting gear 561 may not be influenced by movement of the rack gear 510.

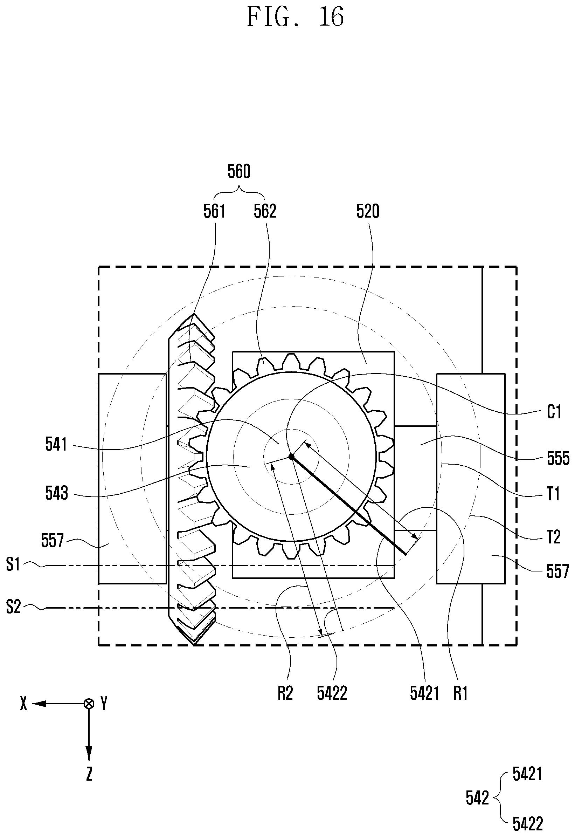

FIG. 16 is a view illustrating a first brush 5421 and a second brush 5422 according to one embodiment of the present disclosure.

FIG. 16 may be a view illustrating a pinion gear 520 and a connecting gear 560 in a direction substantially parallel to Y-axis direction according to one embodiment.

In one embodiment, the pinion gear 520 and the first connecting gear 561 may be coupled to a pinion gear shaft 555. The pinion gear shaft 555 may be at least partially supported by a shaft support member 557. The shaft support member 557 may include a support bearing supporting the pinion gear shaft 555.

With reference to FIG. 16, the first connecting gear 561 may be disposed so as to be at least partially engaged with the second connecting gear 562.

In one embodiment, a center C1 of the sweeper shaft 541 may be substantially the same as a center of the second connecting gear 562.

In one embodiment, the first brush 5421 may extend by a first length R1 from the center C1 of the sweeper shaft 541.

In one embodiment, the second brush 5422 may extend by a second length R2 from the center C1 of the sweeper shaft 541. The second length R2 may be longer than the first length R1.

In one embodiment, the second brush 5422 may be formed thinner than the first brush 5421.

Although the first brush 5421 and the second brush 5422 are illustrated as one each in FIG. 16, this is an example for explanation, and the brush 542 may include a plurality of first brushes 5421 and a plurality of second brushes 5422.

In one embodiment, the first brush 5421 and the second brush 5422 may be coupled so as to surround the circumference of the body 543.

In one embodiment, the first brush 5421 and the second brush 5422 may be alternately disposed along the circumference of the body 543.

In one embodiment, the first brush 5421 and the second brush 5422 may be alternately disposed along the longitudinal direction (e.g., Y-axis direction) of the rack gear 510 (refer to FIG. 14).

In one embodiment, a first trajectory T1 may refer to a trajectory through which an end of the first brush 5421 passes while the first brush 5421 is rotated.

In one embodiment, a second trajectory T2 may refer to a trajectory through which an end of the second brush 5422 passes while the second brush 5422 is rotated.

In one embodiment, an upper end position S1 may refer to a position of the uppermost end of the engagement area 511 (refer to FIG. 14) of the rack gear 510 (refer to FIG. 14). For example, the upper end position S1 may refer to the uppermost end of the gear tooth 5111 (refer to FIG. 14).

In one embodiment, a lower end position S2 may refer to a position of the lowermost end of the engagement area 511 (refer to FIG. 14) of the rack gear 510 (refer to FIG. 14). For example, the lower end position S2 may refer to the lowermost end of the gear root 5112 (refer to FIG. 14).

With reference to FIG. 16, the first brush 5421 may be advantageous in removing a foreign substance positioned at an upper end portion of the engagement area 511 (refer to FIG. 14) of the rack gear 510 (refer to FIG. 14). For example, since the first trajectory T1 through which the end of the first brush 5421 passes is formed to pass through the upper end position S1, a foreign substance positioned at the upper end portion of the rack gear 510 (refer to FIG. 14) may be removed by the first brush 5421.

In one embodiment, since the first brush 5421 is formed thicker than the second brush 5422, it may be easy to push a relatively large foreign substance positioned at the upper end portion of the engagement area 511 (refer to FIG. 14) of the rack gear 510 (refer to FIG. 14).

With reference to FIG. 16, the second brush 5422 may be advantageous in removing a foreign substance positioned at a lower end portion of the engagement area 511 of the rack gear 510. For example, since the second trajectory T2 through which the end of the second brush 5422 passes is formed to pass through the lower end position S2, a foreign substance positioned at the lower end portion of the rack gear 510 (refer to FIG. 14) may be removed by the second brush 5422.

In one embodiment, since the second brush 5422 is formed thinner than the first brush 5421, it may be easy to push a relatively small foreign substance (e.g., fine dust) positioned at the lower end portion of the engagement area 511 (refer to FIG. 14) of the rack gear 510 (refer to FIG. 14).

In one embodiment, since the second brush 5422 in contact with the lower end portion of the rack gear 510 (refer to FIG. 14) is formed thinner than the first brush 5421, it may be reduced that movement of the rack gear 510 (refer to FIG. 14) is influenced by the brush 542.

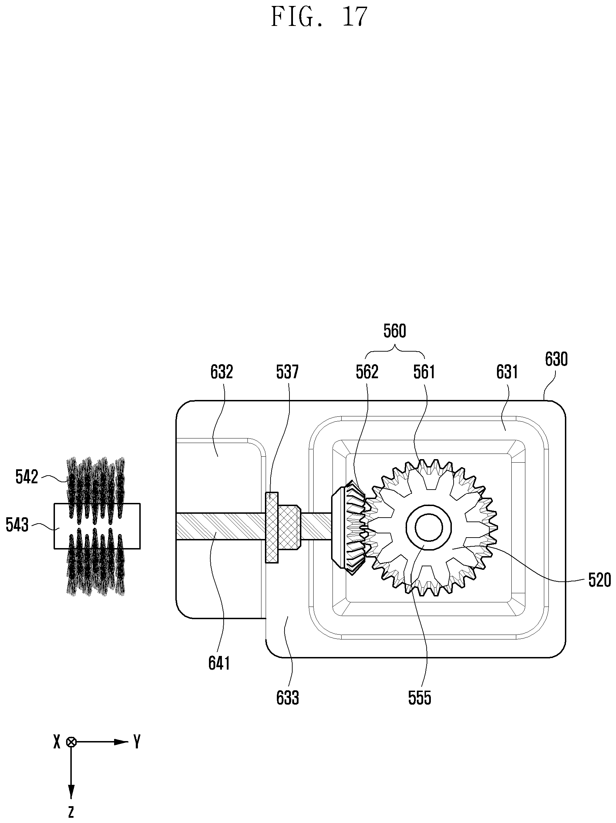

FIG. 17 is a view illustrating a sweeper shaft 641 and a foreign substance collection frame 632 according to one embodiment of the present disclosure.

In FIG. 17, other configurations except for a sweeper shaft 641 and a foreign substance collection frame 632 may be substantially the same as the configuration illustrated in FIG. 13. The detailed description for the configuration substantially the same as FIG. 13 may be omitted.

In one embodiment, the frame 630 may include a gear frame 631, a foreign substance collection frame 632, and/or a partition wall 633. The gear frame 631 and the foreign substance collection frame 632 may be separated by the partition wall 633.

In one embodiment, the foreign substance collection frame 632 may not include the magnetic body 5325 (refer to FIG. 13). The foreign substance collection frame 632 may be disposed so as to surround the sweeper shaft 641.

In one embodiment, the sweeper shaft 641 may include a magnetic body.

In one embodiment, a foreign substance removed from the rack gear 510 (refer to FIG. 12) by the brush 542 may be collected at the sweeper shaft 641. For example, since the sweeper shaft 641 includes a magnetic body and a foreign substance includes a magnetic material, a foreign substance may be attached to the sweeper shaft 641 due to attractive force acting between the sweeper shaft 641 and a foreign substance. A foreign substance attached to the sweeper shaft 641 may be surrounded by the foreign substance collection frame 632.

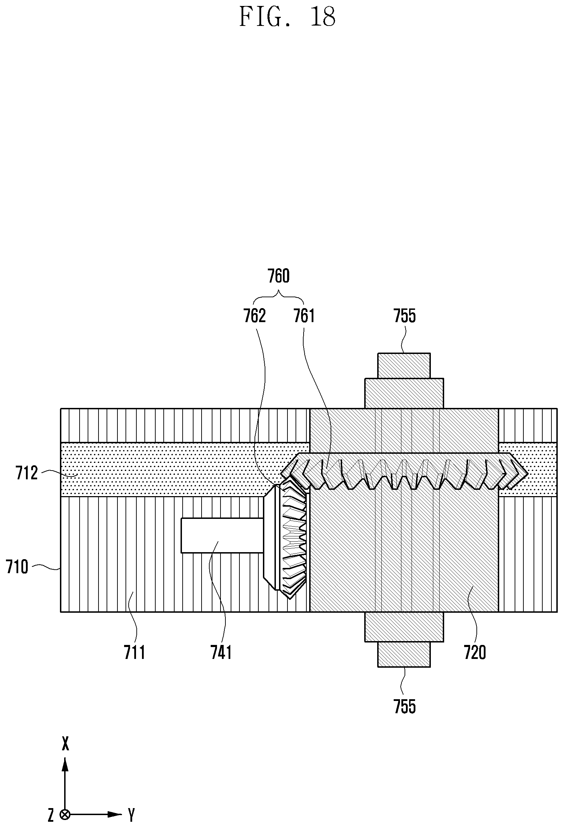

FIG. 18 is a view illustrating a rack gear 710 and a connecting gear 760 according to one embodiment of the present disclosure.

In one embodiment, the rack gear 710 may include an engagement area 711 and/or a groove 712.

In one embodiment, the engagement area 711 may be an area engaged with a pinion gear 720 among areas of the rack gear 710.

In one embodiment, the groove 712 may be formed in a shape in which a portion of the engagement area 711 is concavely recessed. For example, the groove 712 may be formed as a portion of the engagement area 711 is recessed in a height direction (e.g., Z-axis direction). The groove 712 may extend along the longitudinal direction (e.g., Y-axis direction) of the rack gear 710.

In one embodiment, the first connecting gear 761 may be disposed at a position overlapped with the groove 712 of the rack gear 710.

In one embodiment, the groove 712 of the rack gear 710 may not be in contact with the first connecting gear 761. The groove 712 is formed in a shape concavely recessed compared to the engagement area 711, thereby being able to be spaced apart from the first connecting gear 761.

In one embodiment, when a pinion gear shaft 755 is rotated, the pinion gear 720 and the first connecting gear 761 may be rotated together. The second connecting gear 762 may be rotated according to rotation of the first connecting gear 761. A sweeper shaft 741 may be rotated according to rotation of the second connecting gear 762.

In one embodiment, since the first connecting gear 761 is positioned so as to be overlapped with the groove 712 without being in contact with the groove 712 of the rack gear 710, the first connecting gear 761 may be spaced apart without being in contact with the rack gear 710. Even if the first connecting gear 761 is rotated, the rack gear 710 may not be interfered with the first connecting gear 761.

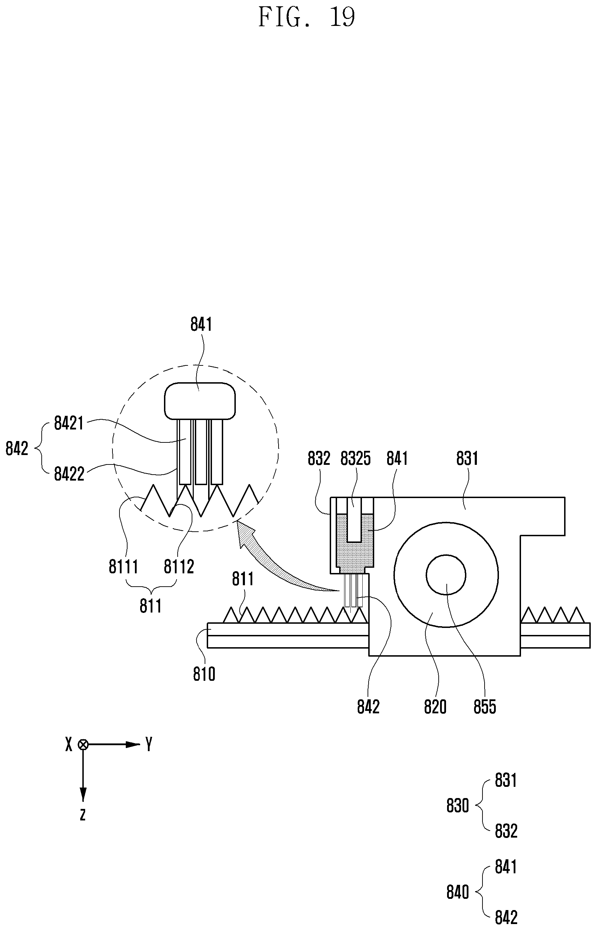

FIG. 19 is a view illustrating a sweeper 840 according to one embodiment of the present disclosure.

In one embodiment, an electronic device (e.g., the electronic device 200 of FIG. 4, the electronic device 300 of FIG. 6) may include a rack gear 810, a pinion gear 820, a frame 830, the sweeper 840 illustrated in FIG. 19.

In one embodiment, the frame 830 may include a gear frame 831 and/or a foreign substance collection frame 832.

In one embodiment, the foreign substance collection frame 832 may be detachably coupled to the gear frame 831.

In one embodiment, the gear frame 831 may be disposed so as to surround the pinion gear 820.

In one embodiment, the sweeper 840 may include a body 841 and/or a brush 842.

In one embodiment, an end of the brush 842 may be coupled to the body 841. For example, one end of the brush 842 is in contact with the rack gear 810, and the other end of the brush 842 may be coupled to the body 841.

In one embodiment, the foreign substance collection frame 832 may include a coupling portion 8325.

In one embodiment, the body 841 of the sweeper 840 may be coupled to the coupling portion 8325 of the foreign substance collection frame 832.

In one embodiment, the sweeper 840 may be detachably coupled to the foreign substance collection frame 832.

In one embodiment, the sweeper 840 may be supported by the frame 830. For example, the sweeper 840 may be supported by the foreign substance collection frame 832.

In one embodiment, the pinion gear 820 may perform rotational motion. A pinion gear shaft 855 is rotated, and the pinion gear 820 coupled to the pinion gear shaft 855 may also be rotated.

In one embodiment, the rack gear 810 may include an engagement area 811 at least partially engaged with the pinion gear 820.

In one embodiment, the engagement area 811 may include a gear tooth 8111 and/or a gear root 8112. The gear tooth 8111 and the gear root 8112 may be alternately formed along the longitudinal direction (e.g., Y-axis direction) of the rack gear 810.

In one embodiment, the rack gear 810 may linearly move by being linked with rotational motion of the pinion gear 820. For example, the rack gear 810 is engaged with the pinion gear 820 in the engagement area 811, and may be moved relative to the pinion gear 820.

In one embodiment, the sweeper 840 may be in contact with at least a portion of the rack gear 810. For example, an end of the sweeper 840 heading for a positive Z-axis direction may be in contact with at least a portion of the rack gear 810.

In one embodiment, the sweeper 840 may serve to remove a foreign substance disposed on the rack gear 810. For example, the sweeper 840 is in contact with at least a portion of the rack gear 810, thereby being able to push a foreign substance disposed on the rack gear 810 to the outside of the rack gear 810.

In one embodiment, the brush 842 may include a first brush 8421 and/or a second brush 8422.

In one embodiment, the second brush 8422 may be formed thinner and longer than the first brush 8421.

In one embodiment, the first brush 8421 may be advantageous in removing a foreign substance positioned at an upper end portion (e.g., an end portion in a negative Z-axis direction) of the engagement area 811 of the rack gear 810. For example, the first brush 8421 may be advantageous in removing a relatively large foreign substance positioned at an upper end portion of the gear tooth 8111 of the rack gear 810.

In one embodiment, the second brush 8422 may be advantageous in removing a foreign substance positioned at a lower end portion (e.g., an end portion in a positive Z-axis direction) of the engagement area 811 of the rack gear 810. For example, the second brush 8422 may be advantageous in removing a relatively small foreign substance (e.g., dust) positioned at a lower end portion of the gear root 8112 of the rack gear 810.

In one embodiment, the foreign substance collection frame 832 may include a space where a foreign substance removed from the rack gear 810 by the sweeper 840 is collected. For example, a foreign substance removed in the rack gear 810 by the sweeper 840 may be collected in at least a portion of the foreign substance collection frame 832.

In one embodiment, the sweeper 840 may be configured in a form fixed to a portion of the frame 830. For example, the sweeper 840 is fixed to a portion of the frame 830, and may not be moved relative to the frame 830. The body 841 and the brush 842 of the sweeper 840 may be moved like the frame 830 according to movement of the frame 830 with respect to the rack gear 810.

In one embodiment, the sweeper 840 may be configured so as to perform reciprocating movement relative to the frame 830. For example, the sweeper 840 may be configured in a wiper form performing reciprocating movement in a direction (e.g., X-axis direction) substantially perpendicular to a direction (e.g., Y-axis direction) in which the frame 830 is moved with respect to the rack gear 810. In one embodiment, the sweeper 840 performs reciprocating movement, and may remove a foreign substance disposed on the rack gear 810.

An adhesive lubricating material (e.g., grease) for reducing friction between a rack gear and a pinion gear may be applied to the rack gear and the pinion gear. A foreign substance introduced from the outside of the rack gear and dust due to friction between the rack gear and the pinion gear may be attached to the adhesive lubricating material. When a foreign substance and dust attached to the adhesive lubricating material are solidified in the rack gear, resistance between the rack gear and the pinion gear is increased, and driving failure of an electronic device may occur. Also, when a foreign substance and dust attached to the adhesive material are solidified in the rack gear and the pinion gear, wear of the rack gear and the pinion gear may be accelerated.

Therefore, it may be necessary to remove a foreign substance and dust positioned at the rack gear before a foreign substance and dust are solidified in the rack gear.

An electronic device 300 according to one embodiment of the present disclosure may include a housing 310, 320 including a first housing 310 and a second housing 320 that is movably coupled to the first housing 310; a driving motor 350, 550 configured to generate driving force for movement of the second housing 320; a pinion gear 370, 520, 820 connected to the driving motor 350, 550; a rack gear 340, 510, 810 disposed in the second housing 320 so as to be at least partially engaged with the pinion gear 370, 520, 820, and configured to linearly move by being linked with rotational motion of the pinion gear 370, 520, 820 resulting from driving of the driving motor 350, 550; a frame 530, 830 having at least one portion that surrounds the pinion gear 520, 820; and a sweeper 540, 840 disposed to be supported by the frame 530, 830.

An electronic device 300 including a sweeper 540, 840 according to one embodiment of the present disclosure may push a foreign substance introduced from the outside of the electronic device 300 and dust generated in the rack gear 510, 810 and the pinion gear 520, 820 to the outside of the rack gear 510, 810.

An electronic device 300 including a sweeper 540, 840 according to one embodiment of the present disclosure removes a foreign substance and dust from the rack gear 510, 810, thereby being able to prevent or reduce that resistance between the rack gear 510, 810 and the pinion gear 520, 820 is increased.

An electronic device 300 including a sweeper 540, 840 according to one embodiment of the present disclosure removes a foreign substance and dust from the rack gear 510, 810, thereby being able to prevent or reduce that driving failure of the electronic device 300 occurs.

An electronic device 300 including a sweeper 540, 840 according to one embodiment of the present disclosure removes a foreign substance and dust from the rack gear 510, 810, thereby being able to prevent or reduce that the rack gear 510, 810 and the pinion gear 520, 820 are worn.

In one embodiment, the frame 530 surrounds at least a portion of the sweeper 540, and may include a foreign substance collection frame 532 where a foreign substance removed from the rack gear 510 by the sweeper 540 is collected.

In one embodiment, the foreign substance collection frame 532 may include a magnetic body 5325 which is disposed such that at least a portion thereof faces at the sweeper 540.

In one embodiment, since the foreign substance (fs) pushed from the rack gear 510 by the brush 542 includes a magnetic material, it may be attached to the magnetic body 5325. Since the foreign substance (fs) is attached to the magnetic body 5325, it may be prevented or reduced that the foreign substance (fs) including metallic dust is scattered to another component inside the electronic device 300.

In one embodiment, the foreign substance collection frame 532 may be detachably coupled with at least a portion of the frame 530.

In one embodiment, since the foreign substance collection frame 532 is detachably coupled with a portion of the frame 530, replacement of the foreign substance collection frame 532 and removal of a foreign substance collected in the foreign substance collection frame 532 may be easy.

In one embodiment, the sweeper 540 may include at least one of a first sweeper 540 rotated by being linked with the pinion gear 520, a second sweeper 840 fixed to at least a portion of the frame 830, and a third sweeper configured so as to perform reciprocating movement between one side and the other side of the rack gear 510.

In one embodiment, the first sweeper 540 may include a sweeper shaft 541 rotated by being linked with the pinion gear 520 and a brush 542 coupled to the sweeper shaft 541.

In one embodiment, the brush 542 may include a first brush 5421 and a second brush 5422 formed thinner and longer than the first brush 5421.

In one embodiment, the brush 542 may cause an adhesive lubricating material applied to the rack gear 510 to be applied to the rack gear 510 thinner and uniformly.

In one embodiment, since the first brush 5421 is formed more thickly than the second brush 5422, it may be easy to push a relatively large foreign substance positioned at an upper end portion of the engagement area 511 of the rack gear 510.

In one embodiment, since the second brush 5422 is formed thinner than the first brush 5421, it may be easy to push a relatively small foreign substance (e.g., fine dust) positioned at a lower end portion of the engagement area 511 of the rack gear 510.

In one embodiment, the electronic device 300 may include a bearing 537 supporting the sweeper shaft 541.

In one embodiment, the bearing 537 surrounds at least a portion of the sweeper shaft 541, and may be a fixing member serving to fix a position of the sweeper shaft 541 in the frame 530. The bearing 537 may further facilitate rotation of the sweeper shaft 541 coupled with the second connecting gear 562.

In one embodiment, the electronic device 300 may include a first connecting gear 561 rotated about a first rotation axis X1 which is the same axis as a rotation axis of the pinion gear 520, and a second connecting gear 562 which is rotated about a second rotation axis X2 perpendicular to the first rotation axis X1 and which is linked with the first connecting gear 561.

In one embodiment, the sweeper shaft 541 may be rotated according to rotation of the second connecting gear 562.

In one embodiment, the second sweeper 840 may include a body 841 fixed and coupled to at least a portion of the frame 830 and a brush 842 coupled to the body 841.

In one embodiment, the frame 530 may include a gear frame 531 surrounding the pinion gear 520, a foreign substance collection frame 532 which surrounds at least a portion of the sweeper 540 and in which a foreign substance removed from the rack gear 510 by the sweeper 540 is collected, and a partition wall 533 separating the gear frame 531 and the foreign substance collection frame 532.

In one embodiment, since the gear frame 531 is separated from the foreign substance collection frame 532 by the partition wall 533, it may be prevented that a foreign substance collected in the foreign substance collection frame 532 is introduced into the gear frame 531. Since it is prevented that a foreign substance is introduced into the gear frame 531, the pinion gear 520 may be driven without being influenced by a foreign substance.

In one embodiment, the electronic device 300 may include a flexible display 305 which is disposed so as to be at least partially supported by the second housing 320, and which is configured such that a display surface area is varied according to movement of the second housing 320 with respect to the first housing 310.

An electronic device 300 according to one embodiment of the present disclosure may include a housing 310, 320 including a first housing 310 and a second housing 320 that is movably coupled to the first housing 310; a driving motor 350, 550 for generating driving force for movement of the second housing 320; a pinion gear 370, 520 connected to the driving motor 350, 550; a rack gear 510 which is disposed in the second housing 320 so as to be at least partially engaged with the pinion gear 370, 520, and which linearly moves by being linked with rotational motion of the pinion gear 370, 520 resulting from driving of the driving motor 350, 550; a connecting gear 560 rotated by being linked with the pinion gear 520; and a sweeper 540 rotated by being linked with the connecting gear 560.

In one embodiment, the electronic device 300 may include a frame 530 having at least one portion that surrounds the pinion gear 520.

In one embodiment, the frame 530 may include a gear frame 531 surrounding the pinion gear 520 and a foreign substance collection frame 532 which surrounds at least a portion of the sweeper 540 and in which a foreign substance removed from the rack gear 510 by the sweeper 540 is collected.

In one embodiment, the foreign substance collection frame 532 may include a magnetic body 5325 which is disposed such that at least a portion thereof faces at the sweeper 540.

In one embodiment, the foreign substance collection frame 532 may be detachably coupled with the gear frame 531.

In one embodiment, the sweeper 540 may include a sweeper shaft 541 rotated by being linked with the pinion gear 520 and a brush 542 coupled to the sweeper shaft 541.

In one embodiment, the brush 542 may include a first brush 5421 and a second brush 5422 formed thinner and longer than the first brush 5421.

In one embodiment, the connecting gear 560 may include a first connecting gear 561 rotated about a first rotation axis X1 which is the same axis as a rotation axis of the pinion gear 520, and a second connecting gear 562 which is rotated about a second rotation axis X2 perpendicular to the first rotation axis X1 and which is linked with the first connecting gear 561, and the sweeper shaft 541 may be rotated according to rotation of the second connecting gear 562.

Technical problems to be solved by the present disclosure are not limited to the above-mentioned technical problems, and other technical problems, which are not mentioned above, may be clearly understood by those skilled in the art to which the present disclosure pertains.

The effects obtained by the present disclosure are not limited to the aforementioned effects, and other effects, which are not mentioned above, will be clearly understood by those skilled in the art to which the present disclosure pertains.

An electronic device according to one embodiment of the present disclosure may be one of various types of electronic devices. The electronic device may include, for example, a portable communication device (e.g., a smartphone), a computer device, a portable multimedia device, a portable medical device, a camera, a wearable device, or a home appliance. The electronic device according to the embodiment of the present disclosure is not limited to the above-mentioned devices.

One embodiment of the present disclosure and the terms used in the embodiment are not intended to limit the technical features disclosed in the present disclosure to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

The term "module" used in one embodiment of the present disclosure may include a unit implemented in hardware, software, or firmware, and may interchangeably be used with other terms, for example, "logic," "logic block," "component," or "circuitry". The module may be a single integral component (i.e., part), or a minimum unit or portion thereof, adapted to perform one or more functions. For example, according to one embodiment, the module may be implemented in a form of an application-specific integrated circuit (ASIC).

One embodiment as set forth herein may be implemented as software (e.g., the program 140) including one or more instructions that are stored in a storage medium (e.g., the internal memory 136 or the external memory 138) that is readable by a machine (e.g., the electronic device 101). For example, the processor (e.g., processor 120) of the machine (e.g., electronic device 101) may invoke and execute at least one of one or more instructions stored from the storage medium. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to the embodiment, a method according to the embodiments of the present disclosure may be included and provided in a computer program product. The computer program product may be traded between a seller and a buyer as a product. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. In case of the distribution online, at least part of the computer program product may be temporarily generated or at least temporarily stored in the machine-readable storage medium, such as memory of the manufacturer's server, a server of the application store, or a relay server.

According to one embodiment, each constituent element (e.g., module or program), among the above-mentioned constituent elements, may include a single object or a plurality of objects, and some of the plurality of objects may be disposed separately in different constituent elements. According to the embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration.

According to one embodiment, operations performed by the module, the program, or another constituent element may be carried out sequentially, in parallel, repeatedly, or heuristically, or one or more of the operations may be executed in a different order or omitted, or one or more other operations may be added.

## Claims

1. An electronic device (300), comprising:
a housing (310, 320) comprising a first housing (310) and a second housing (320) movably coupled with respect to the first housing;
a driving motor (350, 550) configured to generate driving force for movement of the second housing;
a pinion gear (370, 520, 820) connected to the driving motor;
a rack gear (340, 510, 810) disposed in the second housing so as to be at least partially engaged with the pinion gear, and configured to linearly move by being linked with rotational motion of the pinion gear resulting from driving of the driving motor;
a frame (530, 830) having at least one portion that surrounds the pinion gear; and
a sweeper (540, 840) disposed to be supported by the frame.

2. The electronic device of claim 1, wherein the frame comprises a foreign substance collection frame (532) which surrounds at least a portion of the sweeper and in which a foreign substance removed from the rack gear is collected by the sweeper.

3. The electronic device of claim 2, wherein the foreign substance collection frame comprises a magnetic body (5325) of which at least a portion is disposed so as to face the sweeper.

4. The electronic device of claim 2, wherein the foreign substance collection frame is detachably coupled with at least a portion of the frame.

5. The electronic device of claim 1, wherein the sweeper comprises at least one of a first sweeper (540) rotated by being linked with the pinion gear, a second sweeper (840) fixed to at least a portion of the frame, and a third sweeper configured to perform reciprocating movement between one side and the other side of the rack gear.

6. The electronic device of claim 5, wherein the first sweeper comprises:
a sweeper shaft (541) rotated by being linked with the pinion gear; and
a brush (542) coupled to the sweeper shaft.

7. The electronic device of claim 6, wherein the brush comprises:
a first brush (5421); and
a second brush (5422) formed thinner and longer than the first brush.

8. The electronic device of claim 6, comprising a bearing (537) supporting the sweeper shaft.

9. The electronic device of claim 6, further comprising:
a first connecting gear (561) rotated about a first rotation axis (X1) which is the same axis as a rotation axis of the pinion gear; and
a second connecting gear (562) which is rotated about a second rotation axis (X2) perpendicular to the first rotation axis and which is linked with the first connecting gear,
wherein the sweeper shaft is rotated according to rotation of the second connecting gear.

10. The electronic device of claim 5, wherein the second sweeper (840) comprises:
a body (841) fixed and coupled to at least a portion of the frame; and
a brush (842) coupled to the body.

11. The electronic device of claim 1, wherein the frame comprises:
a gear frame (531) surrounding the pinion gear;
a foreign substance collection frame (532) which surrounds at least a portion of the sweeper and in which a foreign substance removed from the rack gear is collected by the sweeper; and
a partition wall (533) separating the gear frame and the foreign substance collection frame.

12. The electronic device of claim 1, further comprising: a flexible display (305) disposed so as to be at least partially supported by the second housing, and configured such that a display surface area is varied according to movement of the second housing with respect to the first housing.

13. The electronic device of claim 1, further comprising:
a connecting gear (560) rotated by being linked with the pinion gear, and
wherein the sweeper is rotated by being linked with the connecting gear.

14. The electronic device of claim 13, wherein the frame comprises a foreign substance collection frame (532) which surrounds at least a portion of the sweeper and in which a foreign substance removed from the rack gear is collected by the sweeper, and
wherein the foreign substance collection frame comprises a magnetic body (5325) of which at least a portion is disposed so as to face the sweeper.

15. The electronic device of claim 13, wherein the sweeper comprises:
a sweeper shaft (541) rotated by being linked with the pinion gear; and
a brush (542) coupled to the sweeper shaft,
wherein the brush comprises a first brush (5421) and a second brush (5422) formed thinner and longer than the first brush,
wherein the connecting gear further comprises: a first connecting gear (561) rotated about a first rotation axis (X1) which is the same axis as a rotation axis of the pinion gear; and a second connecting gear (562) which is rotated about a second rotation axis (X2) perpendicular to the first rotation axis and which is linked with the first connecting gear, and
wherein the sweeper shaft is rotated according to rotation of the second connecting gear.
